# EUROPÄISCHE PATENTSCHRIFT

(11) **EP 3 901 072 B1**
(45) Veröffentlichungstag und Bekanntmachung des Hinweises auf die Patenterteilung: **19.02.2025**
(21) Anmeldenummer: 21154178.4
(22) Anmeldetag: 02.07.2018
(51) Int. Cl.: B65H 16/02, B65H 16/10, B26D 1/56, B65H 19/18, B65H 20/32, B65H 35/08, B26D 7/32

(54) **BEREITSTELLEN VON BAHNFÖRMIGEM ZWISCHENBLATTMATERIAL AN EINEM SCHNEIDBEREICH**
PROVISION OF WEB-SHAPED SHEET MATERIAL TO A CUTTING AREA
FOURNITURE DE MATÉRIAU DE FEUILLE INTERMÉDIAIRE EN FORME DE BANDE À UNE ZONE DE COUPE

(30) Priorität: 03.07.2017 DE 102017114761; 18.08.2017 DE 102017118934
(43) Veröffentlichungstag der Anmeldung: 27.10.2021
(62) Teilanmeldung aus: 18181289.2
(73) Patentinhaber: Weber Food Technology GmbH, 35236 Breidenbach (DE)
(72) Erfinder: Einloft-Velte, Tobias, 35232 Dautphetal (DE); Nispel, Thomas, 35232 Dautphetal (DE); Ritzen, Noël, 57074 Siegen (DE)
(74) Vertreter: Manitz Finsterwald Patent- und Rechtsanwaltspartnerschaft mbB

(56) Entgegenhaltungen:
- EP-A1- 2 848 380
- EP-A2- 1 940 685
- EP-B1- 1 940 685
- EP-B1- 2 848 380
- US-A- 3 848 757
- US-A1- 2002 179 767

## Beschreibung

Die Erfindung betrifft eine Vorrichtung und ein Verfahren zum Bereitstellen von bahnförmigem Zwischenblattmaterial an einem Schneidbereich, in welchem zugeführte Produkte in Scheiben geschnitten und Zwischenblätter eingebracht werden, die im Schneidbereich von dem bereitgestellten Zwischenblattmaterial abgetrennt werden, gemäß dem Oberbegriff des Anspruchs 1 bzw. des Anspruchs 14.

Im Schneidbereich können folglich von den Produkten abgetrennte Scheiben mit den in den Schneidbereich eingebrachten Zwischenblättern versehen werden. Dabei können z.B. entweder Zwischenblätter jeweils zwischen zwei unmittelbar aufeinanderfolgende Scheiben eingebracht oder Zwischenblätter jeweils unter eine Scheibe und somit zwischen diese Scheibe und eine Auflagefläche dieser Scheibe eingebracht werden. Bei der Bildung von Portionen aus mehreren Scheiben beispielsweise befindet sich dann jeweils ein Zwischenblatt unter der untersten Scheibe einer Portion. Eine solche Funktion, die auch als Underleaver-Funktion bezeichnet wird, schließt aber nicht aus, dass bei der Bildung von Portionen jeweils ein Zwischenblatt nicht nur unter der untersten Scheibe liegt, sondern ein oder mehrere Zwischenblätter auch innerhalb der Portion jeweils zwischen zwei aufeinanderfolgende Scheiben eingebracht werden. Unabhängig davon, ob eine Underleaver-Funktion vorgesehen ist oder nicht, kann generell innerhalb einer Portion entweder zwischen jedem Paar unmittelbar aufeinanderfolgender Scheiben oder nur zwischen einem oder mehreren Paaren unmittelbar aufeinanderfolgender Scheiben jeweils ein Zwischenblatt eingebracht werden, z.B. zwischen jedem n-ten Paar, wobei n > 1.

Derartige Vorrichtungen sind auf dem Gebiet des Aufschneidens von Lebensmittelprodukten grundsätzlich bekannt - zum Beispiel aus EP-A-1 940 685 (= WO 2007/050 677 A2) - und werden auch als Interleaver bzw. Underleaver bezeichnet. Dabei kann - wie vorstehend erwähnt - ein Interleaver auch eine Underleaver-Funktion ausüben, und umgekehrt. Die vorliegende Offenbarung gilt also nicht nur für die hier in erster Linie erläuterten Interleaver bzw. das Bereitstellen von Zwischenblättern bzw. Zwischenblattmaterial jeweils zwischen zwei unmittelbar aufeinander folgenden Scheiben, sondern auch für sogenannte "Underleaver", die dazu dienen, Produkten ein Blatt unterzulegen. Mit einer derartigen Unterblattzuführung wird dafür gesorgt, dass die Produkte zumindest nicht mit ihrer gesamten Unterseite unmittelbar auf einer Auflagefläche, beispielsweise einer Fördereinrichtung, aufliegen. Wenn im Folgenden jeweils lediglich der Begriff "Interleaver" verwendet wird, dann gelten die jeweiligen Ausführungen und gilt die jeweilige Offenbarung - soweit sinnvoll - auch für einen "Underleaver". Wie bereits erwähnt, kann ein und dieselbe Vorrichtung zum Bereitstellen von Zwischenblattmaterial bzw. von Zwischenblättern in Abhängigkeit von der jeweiligen Anwendung sowohl eine Interleaver-Funktion als auch eine Underleaver-Funktion ausüben, d.h. ein Interleaver ist im Rahmen dieser Offenbarung gleichzeitig auch ein Underleaver, und umgekehrt.

Die Erfindung betrifft außerdem eine Vorrichtung zum Aufschneiden von Lebensmittelprodukten mit einer Produktzufuhr, die aufzuschneidende Produkte einem Schneidbereich zuführt, in welchem sich ein Schneidmesser rotierend und/oder umlaufend bewegt, um die zugeführten Produkte in Scheiben zu schneiden, und mit einem erfindungsgemäßen Inter- bzw. Underleaver.

Derartige Schneidevorrichtungen werden auch als Slicer oder Hochgeschwindigkeitsslicer bezeichnet, letzteres vor dem Hintergrund, dass mit derartigen Maschinen z.B. stangen- oder laibförmige Lebensmittelprodukte mit hohen Schneidgeschwindigkeiten von mehreren hundert bis einigen tausend Scheiben pro Minute aufgeschnitten werden können. In vielen Anwendungen werden aus den abgetrennten, auf eine z.B. von einem Portionierband gebildete Ablagefläche fallenden Scheiben beispielsweise gestapelte oder geschindelte Portionen gebildet. Ein Interleaver dient beispielsweise dazu, zwischen unmittelbar aufeinanderfolgende Scheiben einer Portion Zwischenblätter einzubringen, damit die Scheiben später leichter voneinander getrennt werden können. Als Material für die Zwischenblätter dient beispielsweise Papier oder eine Kunststofffolie.

Entsprechend dem Fortschritt bei der Entwicklung von Schneidemaschinen, insbesondere hinsichtlich Geschwindigkeit, Genauigkeit und Vielseitigkeit, werden auch an die Inter- bzw. Underleaver immer höhere Anforderungen gestellt. Bekannte Inter- bzw. Underleaver-Konzepte, die grundsätzlich zufriedenstellende Ergebnisse liefern, genügen diesen erhöhten Anforderungen häufig nicht mehr.

Es besteht folglich Bedarf an einer verbesserten Interleaver- bzw. Underleaver-Technologie insbesondere auf dem Gebiet des Aufschneidens von Lebensmittelprodukten mittels Hochgeschwindigkeitsslicern. Besonders der mehrspurige und spurindividuelle Interleaver- und Underleaver-Betrieb steht immer mehr im Vordergrund.

Ein Problem bei den bekannten Inter- bzw. Underleavern besteht darin, dass es sich bei dem Ausstoßen der Materialbahn in den Schneidbereich um einen hochdynamischen Prozess handelt, der umso schwieriger zu handhaben ist, je größer die Schneidgeschwindigkeit ist. Die erforderliche Entkopplung zwischen diesem hochdynamischem Prozess einerseits und dem trägen Materialvorrat, von welchem die Materialbahn entnommen wird, andererseits muss deshalb dazu in der Lage sein, jederzeit eine ausreichend große Bahnlänge zur Verfügung zu stellen, damit sichergestellt ist, dass zu keinem Zeitpunkt die Materialbahn von einem trägen Materialvorrat wie beispielsweise einer Materialrolle entnommen werden muss.

Aufgabe der Erfindung ist es, eine Vorrichtung zum Bereitstellen von bahnförmigem Zwischenblattmaterial dahingehend zu verbessern, dass der Vorgang des Ausstoßens der Materialbahn in den Schneidbereich auch bei vergleichsweise hohen Schneidgeschwindigkeiten zuverlässig von dem Vorgang des Abnehmens der Materialbahn von dem Materialvorrat entkoppelt ist.

Die Lösung der Aufgabe erfolgt durch die Merkmale der unabhängigen Ansprüche 1 und 14.

Die erfindungsgemäße Vorrichtung (Anspruch 1) ist zu einem einspurigen oder mehrspurigen Bereitstellen von bahnförmigem Zwischenblattmaterial ausgebildet und umfasst einen Materialvorrat sowie eine Abnahmeeinrichtung, die zu einem Abnehmen der Materialbahn von dem Materialvorrat ausgebildet ist, wobei für die Materialbahn ein Schlaufenspeicher vorgesehen ist, in welchem die Materialbahn eine Schlaufe bildet, wobei wenigstens ein Sensor zur Detektion der Schlaufe, insbesondere des unteren Schlaufenendes, sowie Mittel zum Bewegen der Materialbahn gegen eine Anlagefläche vorgesehen sind, in die zumindest ein Teil des Sensors integriert ist, und wobei der Sensor derart ausgebildet ist, dass die Schlaufe nur dann detektiert wird, wenn die Materialbahn im Bereich des in die Anlagefläche integrierten Teils des Sensors an der Anlagefläche anliegt.

Die Materialschlaufe bildet gewissermaßen einen nicht-trägen, dynamischen Materialvorrat, dem die jeweils im Schneidbereich benötigte Bahnlänge praktisch verzögerungsfrei entnommen werden kann. Hierdurch wird in vorteilhafter Weise vermieden, dass beim Beschleunigen der Materialbahn in der Materialbahn Spannungen entstehen.

Gemäß einem bevorzugten Ausführungsbeispiel umfasst der Schlaufenspeicher eine Bremse für die Materialbahn. Hierdurch ist sichergestellt, dass die Materialbahn zu jedem Zeitpunkt gespannt ist.

Des Weiteren kann vorgesehen sein, dass der Schlaufenspeicher eine Saugeinrichtung für die Materialschlaufe umfasst. Hierdurch kann die Materialbahn auf einfache und wirkungsvolle Weise beeinflusst werden, um einen gewünschten Bahnverlauf innerhalb des Schlaufenspeichers zu gewährleisten.

Darüber hinaus kann die Saugeinrichtung dazu dienen, eine Bremswirkung auf die Materialbahn auszuüben.

Gemäß einem weiteren Ausführungsbeispiel umfasst der Schlaufenspeicher eine Blaseinrichtung für die Materialschlaufe. Durch eine Blaseinrichtung kann ebenfalls der Verlauf der Materialbahn im Schlaufenspeicher gezielt beeinflusst oder eine jeweilige Schlaufenbildung unterstützt werden.

Bevorzugt ist vorgesehen, dass die Saugeinrichtung eine Außenseite der Materialschlaufe und die Blaseinrichtung eine Innenseite der Materialschlaufe beaufschlagt. In Abhängigkeit von einem jeweils gewünschten Verlauf der Materialbahn im Schlaufenspeicher kann die Beaufschlagung der Materialbahn auch umgekehrt erfolgen.

Des Weiteren kann vorgesehen sein, dass die Materialbahn im Schlaufenspeicher mehr als eine Materialschlaufe bildet. Eine jeweils gewünschte Schlaufenbildung kann durch mehr als eine Saugeinrichtung und/oder durch mehr als eine Blaseinrichtung realisiert oder unterstützt werden.

Eine Saugeinrichtung und eine Blaseinrichtung können zu einem gemeinsamen Luftkreislauf gehören. Die Beeinflussung der Materialbahn innerhalb des Schlaufenspeichers kann hierdurch auf besonders einfache und wirkungsvolle Weise realisiert werden.

Der Luftkreislauf, insbesondere die Stärke und/oder die Richtung einer Luftströmung, kann durch eine interne oder externe Steuereinrichtung in Abhängigkeit von der Schlaufengröße einstellbar und/oder steuerbar sein.

Bevorzugt ist ein Gebläse vorgesehen, dessen Saugseite zu einer Saugeinrichtung und dessen Druckeinrichtung zu einer Blaseinrichtung gehört.

Wenn die Vorrichtung mehrspurig ausgebildet ist, kann gemäß einem Ausführungsbeispiel ein spurindividuell wirksames Gebläse vorgesehen sein, das für jede der in den einzelnen Spuren laufenden Materialbahnen eine individuell einstellbare Saug- und Druckwirkung bereitstellen kann.

Ferner kann vorgesehen sein, dass der Schlaufenspeicher eine Anlagefläche für zumindest einen ausgangsseitigen Bereich der Materialschlaufe umfasst. Die Anlagefläche kann die Materialbahn auf ihrem Weg aus dem Schlaufenspeicher herausführen.

Des Weiteren kann vorgesehen sein, dass die Anlagefläche zu einer Bremse für die Materialbahn gehört.

Vorzugsweise ist die Anlagefläche luftdurchlässig, wobei die Anlagefläche zumindest eine Unterdruckkammer begrenzt, an die eine Saugeinrichtung angeschlossen ist oder die zu einer Saugeinrichtung gehört. Bei der luftdurchlässigen Anlagefläche kann es sich z.B. einfach um ein perforiertes Blech handeln.

Wenn die Vorrichtung mehrspurig ausgebildet ist, kann gemäß einem Ausführungsbeispiel die Anordnung aus Anlagefläche und Unterdruckkammer mehrspurig ausgeführt sein. Hierdurch kann insbesondere für jede der in den einzelnen Spuren laufenden Materialbahnen eine individuell einstellbare Bremswirkung eingestellt werden.

Gemäß einem Ausführungsbeispiel ist die Anlagefläche konvex gekrümmt, wobei insbesondere die Anlagefläche eine bogenförmige Kontur aufweist.

Durch eine derartige Formung der Anlagefläche ergibt sich eine Umschlingung der Anlagefläche durch die Materialbahn. Dies ist insbesondere dann vorteilhaft, wenn die Anlagefläche als Bremse für die Materialbahn wirksam ist, indem z.B. die Anlagefläche, die beispielsweise mit Öffnungen versehen ist, eine Unterdruckkammer begrenzt. Von Vorteil ist hierbei, dass die Materialbahn im Bereich des Übergangs zur Anlagefläche hin und/oder im Bereich des Übergangs von der Anlagefläche weg zumindest näherungsweise tangential zu der gekrümmten Anlagefläche verlaufen kann. Ein solcher Bahnverlauf im Bereich einer als Bremse wirksamen Anlagefläche hat sich als besonders vorteilhaft herausgestellt.

Des Weiteren kann vorgesehen sein, dass eine Bremswirkung der Anlagefläche für die Materialbahn mittels einer Saugeinrichtung, mittels einer Blaseinrichtung oder mittels eines, bevorzugt eine Saugeinrichtung und eine Blaseinrichtung umfassenden, Luftkreislaufes einstellbar und/oder steuerbar ist, insbesondere über eine Luftströmung und/oder über einen Luft-Volumenstrom.

Gemäß einem weiteren Ausführungsbeispiel kann vorgesehen sein, saugseitig - also z.B. auf der Saugseite eines Gebläses oder in einer Unterdruckkammer - eine, insbesondere einstellbare, Nebenluftvorrichtung vorzusehen. Hierdurch lässt sich die Bremswirkung der Anlagefläche vergleichmäßigen. Mit einer Nebenluftvorrichtung, die zum Beispiel als eine Klappe oder eine Membran ausgebildet sein kann, ist es möglich, eine zu große Bremswirkung auf die Materialbahn zu vermeiden. Eine relativ hohe Bremswirkung kann ohne Nebenluftvorrichtung insbesondere dann auftreten, wenn die Schlaufe der Materialbahn vergleichsweise groß ist, so dass ein relativ großer Anteil der Anlagefläche von der Materialbahn bedeckt und z.B. eine relativ große Anzahl von in der Anlagefläche ausgebildeten Öffnungen durch die Materialbahn verschlossen ist.

Gemäß einem Ausführungsbeispiel der Erfindung ist eine Einrichtung vorgesehen, die dazu ausgebildet ist, ein Maß für die Schlaufengröße zu bestimmen, insbesondere für die untere und/oder obere Position der Schlaufe. Als Position der Schlaufe kann die Position des Scheitels oder eines den Scheitel umfassenden Bereiches der Schlaufe definiert sein.

Des Weiteren kann eine interne oder externe Steuervorrichtung vorgesehen sein, die dazu ausgebildet ist, die pro Zeiteinheit in den Schlaufenspeicher gelangende Bahnlänge in Abhängigkeit von der Schlaufengröße zu steuern.

Die Abnahmeeinrichtung, die dazu dient, die Materialbahn von dem Materialvorrat abzunehmen, kann durch die Steuereinrichtung in Abhängigkeit von der Schlaufengröße steuerbar sein.

Die Abnahmeeinrichtung kann derart steuerbar sein, dass das Abnehmen der Materialbahn bei Erreichen einer vorgegebenen minimalen Schlaufengröße gestartet und bei Erreichen einer vorgegebenen maximalen Schlaufengröße beendet wird. Hierdurch lässt sich eine vergleichsweise einfach ausgestaltete Regelung realisieren.

Gemäß einem weiteren Ausführungsbeispiel kann die Abnahmeeinrichtung derart steuerbar sein, dass die pro Zeiteinheit in den Schlaufenspeicher gelangende Bahnlänge in Abhängigkeit von der Schlaufengröße kontinuierlich, insbesondere rampenartig, veränderbar ist.

Als ein Maß für die Schlaufengröße kann das Erreichen einer vorgegebenen minimalen Schlaufengröße und/oder das Erreichen einer vorgegebenen maximalen Schlaufengröße vorgesehen sein. Ein solches Konzept lässt sich vergleichsweise einfach realisieren, da lediglich zwei Extremwerte für die Schlaufengröße detektiert werden müssen. Die minimale Schlaufengröße kann durch eine vorgegebene oder vorgebbare obere Position der Schlaufe definiert sein. Die maximale Schlaufengröße kann durch eine vorgegebene oder vorgebbare untere Position der Schlaufe definiert sein.

In einem Ausführungsbeispiel kann vorgesehen sein, dass eine an die jeweilige Betriebssituation angepasste Geschwindigkeit der in den Schlaufenspeicher gelangenden Materialbahn errechnet wird, die beim Eintritt vorgegebener Bedingungen entsprechend geändert wird. So kann z.B. bei Erreichen einer vorgegebenen minimalen Schlaufengröße und bei Erreichen einer vorgegebenen maximalen Schlaufengröße die Geschwindigkeit der Materialbahn entsprechend erhöht bzw. erniedrigt werden.

Gemäß einem weiteren Ausführungsbeispiel kann als ein Maß für die Schlaufengröße der variierende Einfluss der Materialschlaufe auf eine Saugeinrichtung vorgesehen sein. Hierbei kann eine ohnehin vorgesehene Saugeinrichtung zum Beeinflussen der Materialbahn zusätzlich genutzt werden, um Informationen über die momentane Schlaufengröße zu erhalten. Beispielsweise können Öffnungen, die in einer im Strömungsweg der Saugeinrichtung liegenden Anlagefläche ausgebildet sind, zu detektierbaren Änderungen der Druck- und/oder Strömungsverhältnisse führen, die auftreten, wenn sich die Schlaufengröße und folglich die Anzahl der von der Materialbahn verschlossenen Öffnungen ändert.

Bevorzugt kann als ein Maß für die Schlaufengröße das Ergebnis einer Unterdruckmessung in einer oder mehreren Unterdruckkammern vorgesehen sein.

Alternativ oder zusätzlich kann eine lokale Unterdruckmessung ein Maß für die Schlaufengröße liefern, bei der nicht der Druck in der oder den Unterdruckkammern gemessen zu werden braucht, sondern bei der es genügt, den lokalen Druck in einem, insbesondere viel, kleineren Volumen zu messen, z.B. in einem Bereich hinter der Anlagefläche. Es können mehrere derartige Volumina für lokale Druckmessungen vorgesehen sein, die in unterschiedlichen, sich z.B. in der Höhe unterscheidenden, Positionen angeordnet sind, welche unterschiedliche Schlaufengrößen repräsentieren.

Des Weiteren kann als ein Maß für die Schlaufengröße der variierende Einfluss der Materialschlaufe auf eine luftdurchlässige Anlagefläche vorgesehen sein.

Insbesondere dann, wenn die Vorrichtung mehrspurig ausgebildet ist, kann eine Mehrzahl von Unterdruckkammern oder eine in eine Mehrzahl von Einzelkammern unterteilte Unterdruckkammer vorgesehen sein, wobei die Kammern von einer Anlagefläche für die Materialbahn oder für die Materialbahnen begrenzt werden. Durch in den einzelnen Kammern erfolgende Unterdruckmessungen kann ein differenziertes, ortsaufgelöstes Bild von der Bedeckung der Ablagefläche erhalten werden. Insbesondere bei einem Mehrspurbetrieb können hierdurch die Schlaufengrößen spurindividuell bestimmt werden, wenn die Kammern entsprechend spurbezogen angeordnet und/oder ausgerichtet sind.

Gemäß einem weiteren Ausführungsbeispiel der Erfindung ist als ein Maß für die Schlaufengröße das Ergebnis einer Positionsbestimmung der Materialschlaufe vorgesehen.

Generell und unabhängig von der konkreten Messmethode kann die Schlaufengröße bestimmt werden, indem die Position der Schlaufe im Schlaufenspeicher bestimmt wird. Beispielsweise bei einer im Schlaufenspeicher hängenden Schlaufe ist die Position des unteren Schlaufenendes, d.h. des Scheitelpunktes der Schlaufe, ein Maß für die Schlaufengröße. Vergrößert sich die Schlaufe und detektiert ein im Schlaufenspeicher in einer bestimmten Höhe, die z.B. einer vorgegebenen maximalen Schlaufengröße entspricht, angeordneter Sensor das Vorhandensein des unteren Schlaufenendes in dieser Höhe zu einem bestimmten Zeitpunkt erstmalig, so hat zu diesem Zeitpunkt die Schlaufe ihre vorgegebene maximale Größe erreicht. Mehrere Sensoren können in unterschiedlichen Höhen angeordnet sein. Dies ist aber nicht zwingend. Ein in derjenigen Höhe, die der vorgegebenen maximalen Schlaufengröße entspricht, wirksamer Sensor genügt, um das Erreichen der maximalen Schlaufengröße zu erkennen und z.B. an eine Steuerung zu kommunizieren.

Das erfindungsgemäße Verfahren (Anspruch 14) ist ein Verfahren zum einspurigen oder mehrspurigen Bereitstellen von bahnförmigem Zwischenblattmaterial an einem Schneidbereich, in welchem einspurig oder mehrspurig zugeführte Produkte in Scheiben geschnitten und Zwischenblätter eingebracht werden, die im Schneidbereich von dem bereitgestellten Zwischenblattmaterial abgetrennt werden, wobei von zumindest einem Materialvorrat wenigstens eine Materialbahn abgenommen wird, die in einem Schlaufenspeicher eine Schlaufe bildet, wobei wenigstens ein Sensor zur Detektion der Schlaufe, insbesondere des unteren Schlaufenendes, sowie Mittel zum Bewegen der Materialbahn gegen eine Anlagefläche vorgesehen sind, in die zumindest ein Teil des Sensors integriert ist, und wobei der Sensor derart ausgebildet ist, dass die Schlaufe nur dann detektiert wird, wenn die Materialbahn im Bereich des in die Anlagefläche integrierten Teils des Sensors an der Anlagefläche anliegt.

Die Integration des Sensors bzw. eines Teils des Sensors in die Anlagefläche umfasst auch eine Anordnung des Sensors bzw. des Sensorteils im Bereich der Anlagefläche, d.h. in einer Ebene, die nicht mit der durch die Anlagefläche definierten Ebene zusammenfällt. Mit anderen Worten kann der Sensor bzw. der Sensorteil gegenüber der Anlagefläche, insbesondere geringfügig, vorstehen oder zurückversetzt sein.

Bei dem erwähnten Sensorteil handelt es sich insbesondere um einen bezüglich der Materialbahn im weitesten Sinne sensitiven Teil des Sensors, der auf die Gegenwart der Materialbahn anspricht. Unterschiedliche Messprinzipien können dabei zur Anwendung kommen.

Bevorzugt ist der Sensor oder der in die Anlagefläche integrierte Sensorteil derart angeordnet, dass die Schlaufe erst dann erkannt wird, wenn die Schlaufe eine vorgegebene maximale Schlaufengröße erreicht hat.

Die Anlagefläche kann eine Unterdruckkammer begrenzen, beispielsweise derart, wie es an anderer Stelle der vorliegenden Offenbarung beschrieben ist. Gemäß einem möglichen Messprinzip kann der Sensor einen eigenen, insbesondere im Vergleich zur Unterdruckkammer relativ kleinen, Messraum umfassen, an den eine Unterdruckquelle, z.B. eine Vakuumpumpe, und ein Druckmessgerät angeschlossen sind. Als in die Anlagefläche integrierter Teil des Sensors kann eine Messöffnung in der Anlagefläche vorgesehen sein, die mit dem Messraum des Sensors kommuniziert. Die Messöffnung kann auch vom Sensor selbst gebildet sein. Sobald diese Öffnung zumindest teilweise von der mittels der Unterdrucckammer angesaugten und dadurch zur Messöffnung hin bewegten Materialbahn verschlossen wird, die Materialbahn also zumindest einen Teil des die Öffnung begrenzenden Randes des Sensors oder der Anlagefläche berührt, sinkt der Druck innerhalb des von der Unterdruckquelle beaufschlagten Messraumes. Diese Druckänderung wird mittels des Messgerätes erfasst und kann an eine Steuerung kommuniziert werden. Auf diese Weise kann die Schlaufe und insbesondere das Erreichen einer vorgegebenen maximalen Schlaufengröße, mit welcher die Position der Messöffnung korrespondiert, erkannt werden.

Durch eine andere Position des Sensors bzw. der Messöffnung oder durch weitere Sensoren können alternativ oder zusätzlich auch andere Positionen der Schlaufe erkannt werden, beispielsweise eine vorgegebene minimale Schlaufengröße, mit welcher ein an einer anderen Position angeordneter Sensor bzw. dessen Messöffnung korrespondiert.

Ein alternatives Messprinzip eines Schlaufendetektors gemäß einem weiteren Ausführungsbeispiel dieses Aspektes der Erfindung sieht vor, dass der Sensor bzw. der erwähnte Sensorteil auf eine Berührung mit der Materialbahn reagiert. Der Sensor bzw. der Sensorteil kann z.B. kapazitiv, induktiv, elektromechanisch und/oder elektrostatisch wirksam sein. Der Sensor kann wiederum das Erkennen der Schlaufe an eine Steuerung kommunizieren.

Bei einer mehrspurigen Ausgestaltung kann für jede Materialbahn ein Schlaufendetektor vorgesehen sein, wobei die einzelnen Schlaufendetektoren unabhängig voneinander betrieben werden können. Hierdurch lässt sich eine spurindividuelle Schlaufendetektion realisieren.

Unabhängig davon, ob ein oder mehrere derartige Sensoren bzw. Schlaufendetektoren vorgesehen sind, ist der Schlaufendetektor bzw. sind die Schlaufendetektoren in Querrichtung verstellbar, um mit der jeweiligen Spur ausgerichtet werden zu können. Die korrekte Querposition eines Schlaufendetektors hängt insbesondere von der Breite der jeweiligen Materialbahn und von der Anzahl der Spuren ab. Die Anzahl der Spuren des Inter- bzw. Underleavers und damit im Schlaufenspeicher sowie die Breite der Materialbahnen können in Abhängigkeit von der jeweiligen Anwendung variieren. In Querrichtung verstellbare Schlaufendetektoren sind daher vorteilhaft.

Wenn ein mehrspuriger Slicer mit einem erfindungsgemäßen Interleaver versehen ist, dann ist vorzugsweise eine gemeinsame Steuereinrichtung vorgesehen, die dazu ausgebildet ist, das Aufschneiden der Produkte und das Bereitstellen des Zwischenblattmaterials spurindividuell zu koordinieren.

Die Erfindung wird im Folgenden beispielhaft unter Bezugnahme auf die Zeichnung beschrieben. Es zeigen:
- Fig. 1: schematisch eine Seitenansicht eines Slicers mit einem Interleaver gemäß einem Ausführungsbeispiel der Erfindung sowie drei schematisierte Einzeldarstellungen,
- Fig. 2 - 4: jeweils schematisch eine Ausführungsform einer Vorschubeinheit eines Interleavers, und
- Fig. 5 und 6: jeweils schematisch in einer gegenüber Fig. 1 vereinfachten Seitenansicht einen Slicer mit einem Interleaver/Underleaver gemäß einem weiteren Ausführungsbeispiel der Erfindung.

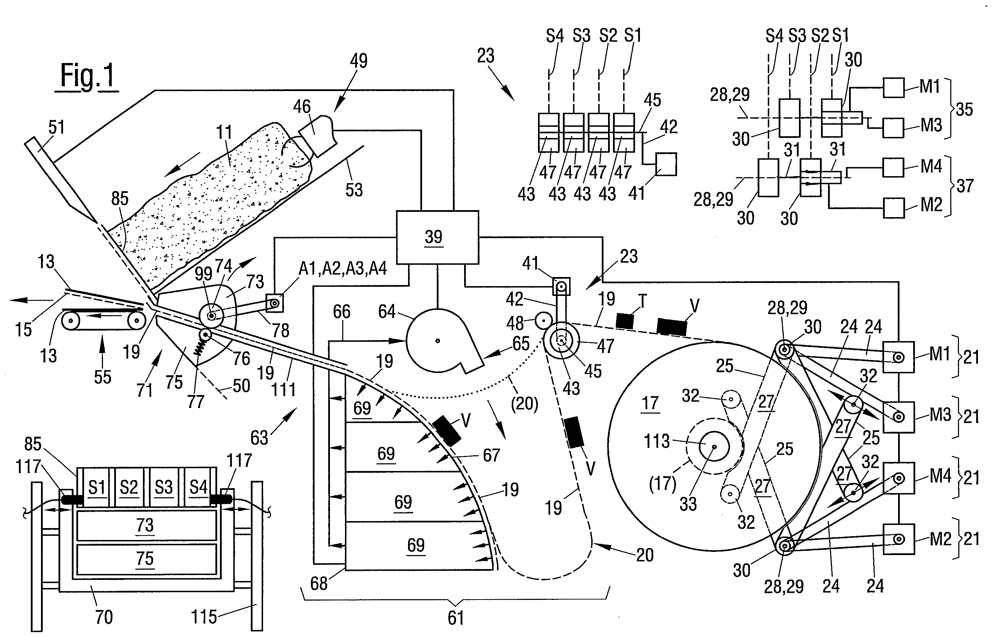

Die große Darstellung in Fig. 1 zeigt in einer schematischen, nicht maßstabsgerechten Seitenansicht einen mehrspurigen Hochgeschwindigkeitsslicer, also eine Vorrichtung zum mehrspurigen Aufschneiden von Lebensmittelprodukten wie beispielsweise Wurst, Fleisch oder Käse.

In dem dargestellten Ausführungsbeispiel wird der Slicer vierspurig betrieben. Auf einer zur Horizontalen geneigten Produktauflage 53 liegen vier aufzuschneidende Produkte 11 nebeneinander. Eine Produktzufuhr 49 umfasst für jede Spur, also für jedes der vier Produkte 11, einen auch als Produktgreifer bezeichneten Produkthalter 46, der das Produkt 11 am hinteren Ende hält und in der durch den Pfeil angedeuteten Zufuhrrichtung einer senkrecht zur Produktauflage 53 verlaufenden Schneidebene 50 zuführt, in der sich ein Schneidmesser 51 bewegt, durch dessen Schneidkante die Schneidebene 50 definiert ist.

Bei dem Schneidmesser 51 kann es sich um ein sogenanntes Sichel- oder Spiralmesser mit einer sichel- oder spiralförmig verlaufenden Schneidkante handeln, welches lediglich um eine nicht dargestellte Messerachse rotiert. Alternativ kann das Schneidmesser 51 ein sogenanntes Kreismesser mit einer kreisförmigen Schneidkante sein, das um eine eigene Messerachse rotiert und zusätzlich um eine parallel versetzt zur Messerachse verlaufende Achse planetarisch umläuft, um die zum Abtrennen von Scheiben 13 von den Produkten 11 erforderliche Schneidbewegung relativ zu den Produkten 11 zu erzeugen.

Die Produktzufuhr 49 ist spurindividuell betreibbar, d.h. die Produkthalter 46 können sich grundsätzlich unabhängig voneinander in der Zufuhrrichtung bewegen und somit die einzelnen Produkte 11 mit unterschiedlichen Geschwindigkeiten und Geschwindigkeitsprofilen der Schneidebene 50 zuführen. Dies gilt auch, wenn als Produktzufuhr 49 anstelle der Produkthalter 46 oder zusätzlich zu den Produkthaltern 46 spurindividuell antreibbare Produktauflagebänder anstelle einer passiven Produktauflage 53 verwendet werden. Hierdurch kann in jeder Spur unabhängig von den jeweils anderen Spuren der Aufschneidevorgang individuell gesteuert werden, insbesondere mit dem Ziel einer gewichtsgenauen Erzeugung von Scheiben 13 bzw. von jeweils aus mehreren Scheiben 13 gebildeten Portionen unter Berücksichtigung der individuellen Produkteigenschaften wie insbesondere Gewichtsverteilung und Querschnittsprofil.

Es ist auch möglich, in einer Spur den Produkthalter 46 anzuhalten oder entgegen der Zufuhrrichtung zu bewegen, um vorübergehend keine Scheiben 13 von dem betreffenden Produkt 11 abzutrennen, während die Produkte 11 in den anderen Spuren weiterhin aufgeschnitten werden. Die spurindividuelle Produktzufuhr 49 kann auch die Schneidbewegung des Schneidmessers 51 berücksichtigen, die sich dadurch auszeichnet, dass pro Schneidbewegung - also pro Umlauf bzw. Rotation des Schneidmessers 51 - zwar von allen Produkten 11 jeweils eine Scheibe 13 abgetrennt wird, dies jedoch nicht exakt zeitgleich erfolgt, sondern aufgrund des eine bestimmte Zeitdauer benötigenden Durchgangs des Schneidmessers 51 durch die Produkte 11 die abgetrennten Scheiben 13 der Produkte 11 zeitlich nacheinander auf die hier von einem sogenannten Portionierband 55 gebildete Ablagefläche fallen.

Für viele Produkte 11, beispielsweise Schinken oder manche Käsesorten, ist es erwünscht, wenn die jeweils aufeinanderliegenden, beispielsweise eine stapelförmige oder geschindelte Portion bildenden Scheiben 13 voneinander getrennt sind, damit sie später vom Verbraucher leichter einzeln aus einer die Portion enthaltenden Verpackung entnommen werden können. Hierzu dienen auf dem Gebiet der Hochgeschwindigkeitsslicer sogenannte Interleaver, also Vorrichtungen zum Bereitstellen von bahnförmigem Zwischenblattmaterial, mit denen es möglich ist, zwischen unmittelbar aufeinanderfolgende Scheiben 13 Zwischenblätter 15 einzubringen.

Interleaver gibt es in unterschiedlichen Ausgestaltungen. Gemäß einer verbreiteten Funktionsweise, die auch für den hier dargestellten erfindungsgemäßen Interleaver vorgesehen ist, werden die endlosen Materialbahnen 19 im Bereich der Schneidebene 50 von unten kommend entsprechend der durch die Schneidbewegung des Schneidmessers 51 vorgegebenen Taktung ausgestoßen. Dies erfolgt derart, dass das vordere Ende der betreffenden Materialbahn 19 vor der Schnittfläche des betreffenden Produktes 11 liegt und zusammen mit der als nächstes abgetrennten Scheibe 13 von der Materialbahn 19 mittels des Schneidmessers 51 abgeschnitten wird und so ein Zwischenblatt 15 bildet. Dieses Zwischenblatt kommt auf dem Portionierband 55 bzw. der zuvor abgetrennten Scheibe 13 und unterhalb derjenigen Scheibe 13 zu liegen, mit der zusammen das Zwischenblatt 15 zuvor abgetrennt wurde.

Der Aufbau und die Funktionsweise derartiger Slicer und auch das Grundprinzip eines Interleavers sind dem Fachmann hinlänglich bekannt, so dass hierauf im Folgenden nicht näher eingegangen zu werden braucht.

Der in den Slicer integrierte erfindungsgemäße Interleaver ist mehrspurig und zu einem durchgehend spurindividuellen Bereitstellen des Zwischenblattmaterials ausgebildet. Nachfolgend werden Aufbau und Funktionsweise des Interleavers am Beispiel eines Vierspurbetriebs erläutert. Durch eine vergleichsweise einfache Umrüstung kann der erfindungsgemäße Interleaver aber auch einspurig, zweispurig oder dreispurig betrieben werden. Die jeweilige Betriebsart ist beispielsweise von den aufzuschneidenden Produkten, den nachgeschalteten Förder- und Sortiereinrichtungen sowie der Verpackungsart bzw. der Verpackungsmaschine abhängig. Generell ist der erfindungsgemäße Interleaver derart konzipiert, dass ein Betrieb mit beliebig vielen Spuren und folglich auch mit mehr als vier Spuren möglich ist.

Für jede der vier Spuren S1, S2, S3 und S4 umfasst das Bereitstellen des Zwischenblattmaterials das Abnehmen des Materials von einem durch eine Materialrolle 17 gebildeten Materialvorrat, das Speichern von Material in einem Schlaufenspeicher 61, das Führen des Materials in einem Bereich zwischen dem Schlaufenspeicher 61 und einer Ausgabeeinrichtung 71 sowie das Ausgeben des Materials mittels der Ausgabeeinrichtung 71.

Für jede Spur umfasst das Abnehmen der Materialbahn 19 von der Materialrolle 17 das Abrollen der Materialbahn 19 mittels eines Abrollantriebs 21 und das Fördern der Materialbahn 19 in den Schlaufenspeicher 61 hinein mittels einer für alle Spuren gemeinsamen Fördereinrichtung 23. Die einzelnen Abrollantriebe 21 und die gemeinsame Fördereinrichtung 23 bilden eine Abnahmeeinrichtung des erfindungsgemäßen Interleavers.

Für jede Spur erfolgt das Speichern der Materialbahn 19 durch die Bildung einer Materialschlaufe 20 im Schlaufenspeicher 61. Im Schlaufenspeicher 61 werden die einzelnen Materialbahnen 19 bzw. Schlaufen 20 durch Trennwände (nicht dargestellt) seitlich geführt, um die Spurtreue der Materialbahnen 19 zu gewährleisten.

Im dargestellten Ausführungsbeispiel wird die gesamte Transportstrecke für die Materialbahn 19 zwischen dem Schlaufenspeicher 61 und der Ausgabeeinrichtung 71 von einem Schacht 111 gebildet, in welchem die einzelnen Materialbahnen 19 geführt werden. Eine solche Ausgestaltung ist in der Praxis zwar möglich. Bevorzugt sind jedoch zwischen dem Schlaufenspeicher 61 und der Ausgabeeinrichtung 71 zusätzlich zu einem reinen Führungsabschnitt, wie er in Fig. 1 durch den Schacht 111 gebildet ist, weitere Einrichtungen vorgesehen, auf die an dieser Stelle nicht näher eingegangen werden soll.

Das Ausgeben der einzelnen Materialbahnen 19 umfasst jeweils das Entnehmen der Materialbahn 19 aus dem Schlaufenspeicher 61 und das Ausstoßen der Materialbahn 19 in den Schneidbereich, also vor die Schnittfläche des betreffenden Produktes 11, wie vorstehend erläutert. Beim Entnehmen wird die Materialbahn 19 aus dem Schlaufenspeicher 61 gezogen. Gleichzeitig wird dabei die Materialbahn 19 in den Schneidbereich vorgeschoben und damit ausgestoßen.

Diese einzelnen Bereiche des erfindungsgemäßen Interleavers, also die Abnahmeeinrichtung mit den einzelnen Abrollantrieben 21 und der gemeinsamen Fördereinrichtung 23, der Schlaufenspeicher 61 sowie die Ausgabeeinrichtung 71 werden im Folgenden näher beschrieben. Sofern nichts anderes erwähnt ist, gilt die jeweilige Beschreibung von Funktion und Aufbau für jede der einzelnen Spuren.

Das Zusammenspiel dieser einzelnen Funktionseinheiten des Interleavers untereinander und auch das Zusammenspiel des Interleavers mit den Funktionseinheiten des Slicers, insbesondere - aber nicht ausschließlich - dem Schneidmesser 51 und der Produktzufuhr 49, wird durch eine Steuereinrichtung 39 gesteuert, bei der es sich um die zentrale Steuereinrichtung des Slicers und somit um eine bezüglich des Interleavers externe Steuereinrichtung handeln kann. Alternativ kann der Interleaver eine interne Steuereinrichtung aufweisen, die mit einer Steuereinrichtung des Slicers zusammenarbeitet.

Des Weiteren kann der Interleaver zusätzlich externe Signale erhalten, z.B. von einem Kamerasystem, welches die mittels des Slicers erzeugten Portionen bzw. die Portionsbildung aus den abgetrennten Scheiben überwacht,

Die Materialrollen 17 der einzelnen Spuren sind um eine von einem gemeinsamen Dorn definierte gemeinsame Drehachse 33 drehbar gelagert. Jede Materialrolle 17 umfasst einen Rollenkern 113, auf dem die Materialbahn 19 aufgewickelt ist. Die Materialrollen 17 sind auf dem Dorn insofern frei drehbar, als der Drehantrieb für die Materialrollen 17 zum Abrollen der Materialbahnen 19 nicht über diesen gemeinsamen Dorn erfolgt.

Stattdessen ist für jede Materialrolle 17 ein eigener Abrollantrieb 21 vorgesehen. Jeder Abrollantrieb 21 umfasst einen um eine Schwenkachse 28 verschwenkbaren Antriebsarm 27. Jeder Antriebsarm 27 umfasst einen nicht dargestellten Träger, an dessen einem Ende eine Antriebsrolle 30 und an dessen anderem Ende eine Umlenkrolle 32 angebracht ist. Als Antriebsorgan für die Materialrolle 17 dient ein um die Antriebsrolle 30 und die Umlenkrolle 32 umlaufendes Endlosband 25, das als Reibband ausgebildet ist und dazu dient, über das der Materialrolle 17 zugewandete Trum kraftschlüssig mit der aufgewickelten Materialbahn 19 der Materialrolle 17 zusammenzuwirken.

Wie auch in der schematisierten Darstellung oben rechts in Fig. 1 gezeigt, ist jede Antriebsrolle 30 drehfest mit einer Antriebswelle 31 verbunden, die mittels eines Antriebsmotors M über einen Antriebsriemen 24 in Drehung versetzt werden kann, um das Reibband 25 anzutreiben und auf diese Weise die Materialbahn 19 von der Materialrolle 17 abzurollen.

Da die vier Spuren S1, S2, S3 und S4 des Interleavers parallel verlaufen und somit auch vier Materialrollen 17 nebeneinander auf dem gemeinsamen Dorn sitzen, sind die vier Antriebsarme 27 entsprechend in Querrichtung versetzt zueinander angeordnet. Dies ist in der schematisierten Darstellung oben rechts in Fig. 1 durch die Zuordnung der Spuren S1 bis S4 zu den einzelnen Antriebsrollen 30 der Antriebsarme 27 angedeutet.

Besonders vorteilhaft sind die räumliche Anordnung der Antriebsarme 27 sowie die Art und Weise des Drehantriebs für die Antriebsrollen 30. Die Drehachsen 29 der Antriebswellen 31 und somit der Antriebsrollen 30 fallen jeweils mit der Schwenkachse 28 des betreffenden Antriebsarmes 27 zusammen. Dabei ist nicht für alle Antriebsarme 27 eine einzige gemeinsame Schwenkachse 28 vorgesehen. Stattdessen sind die Antriebsarme 27 paarweise zusammengefasst, wobei für jedes Paar eine gemeinsame Schwenkachse 28 vorgesehen ist. Dabei sind den Spuren S1 und S3 zwei um eine obere Schwenkachse 28 verschwenkbare Antriebsarme 27 zugeordnet, während den Spuren S2 und S4 zwei Antriebsarme 27 zugeordnet sind, die um eine untere Schwenkachse 28 verschwenkbar sind.

In dem dargestellten Ausführungsbeispiel besitzen alle Antriebsarme 27 die gleiche Länge und liegen die obere Schwenkachse 28 und die untere Schwenkachse 28 auf einem Kreiszylinder um die gemeinsame Drehachse 33 der Materialrollen 17. Alternativ können die Antriebsarme 27 unterschiedlich lang und die Schwenkachsen 28 anders angeordnet sein.

Sowohl für das obere Paar von Antriebsarmen 27 als auch für das untere Paar von Antriebsarmen 27 ist jeweils ein Koaxialwellenantrieb 35 bzw. 37 vorgesehen. Die beiden Antriebsmotoren M1 und M3 gehören zu dem oberen Koaxialwellenantrieb 35, während der untere Koaxialwellenantrieb 37 die beiden Antriebsmotoren M4 und M2 umfasst. Ein Motor M3 bzw. M4 ist jeweils mit einer inneren Antriebswelle 31 für die axial weiter entfernt gelegene Antriebsrolle 30 verbunden, während der jeweils andere Motor M1 bzw. M2 mit einer die innere Antriebswelle 31 umgebenden Hohlwelle 31 verbunden ist, auf der die näher gelegene Antriebsrolle 30 sitzt.

Wie bereits erwähnt, sind die Antriebsmotoren M1 bis M4 nicht direkt mit den Antriebswellen 31 verbunden, sondern über Antriebsriemen 24. Dies ermöglicht eine versetzte oder abgesetzte Positionierung der Motoren und folglich eine optimale Nutzung des im Interleaver zur Verfügung stehenden Raumes. Darüber hinaus kann hierdurch der Interleaver vergleichsweise schmal gebaut werden, da die Motoren M1 bis M4 jeweils nicht in axialer Verlängerung der Antriebswellen 31 positioniert zu werden brauchen.

Ein weiterer Vorteil dieses Antriebskonzepts besteht darin, dass alle Motoren M1 bis M4 einschließlich der Antriebsriemen 24 nur auf einer Seite des Interleavers angeordnet sind. Über die andere Seite des Interleavers ist dieser Bereich daher besser zugänglich. Besonders vorteilhaft ist, dass alle Antriebsrollen 30 und somit Antriebsarme 27 von der gleichen Seite aus - nämlich ausgehend von der "bevorzugten" Bedienseite - auf die jeweilige Antriebswelle 31 aufgesteckt und von dieser abgenommen werden können. Dies erleichtert nicht nur die Reinigung und die Wartung, sondern ermöglicht auch einen einfachen und schnellen Umbau beispielsweise dann, wenn auf einen Slicer- und Interleaverbetrieb mit einer anderen Spuranzahl umgestellt werden soll.

Diese Vorteile gelten auch für die Anordnung der Materialrollen 17, die alle von derselben Seite aus - und zwar von der gleichen Seite wie die Abrollantriebe 21 - auf den gemeinsamen Dorn aufgesteckt und von diesem abgenommen werden können. Es genügt daher, wenn die Funktionsbereiche des Interleavers nur von einer Seite aus zugänglich sind.

Für jeden Antriebsarm 27 ist zudem ein nicht dargestellter Schwenkantrieb vorgesehen. Der Schwenkantrieb kann beispielsweise eine Kolben/Zylinder-Anordnung umfassen. Hierdurch können die Antriebsarme 27 jeweils in einen passiven Zustand geschwenkt werden, in welchem das Reibband 25 außer Reibeingriff mit der Materialrolle 17 ist. Bei diesem passiven Zustand kann es sich beispielsweise um eine Parkposition handeln, in welche die Antriebsarme 27 geschwenkt werden, wenn neue Materialrollen 17 eingesetzt werden sollen.

Dass erfindungsgemäß die Abrollantriebe 21 jeweils mit ihrem Reibband 25 kraftschlüssig am äußeren Umfang der Materialrolle 17 angreifen, um die Materialbahn 19 abzurollen, hat den Vorteil, dass die Abrollrate, d.h. die pro Zeiteinheit abgerollte Bahnlänge, unabhängig von dem momentanen Durchmesser der Materialrolle 17 und somit deren Aufbrauchgrad ist. Die vorstehend erwähnten Schwenkantriebe (nicht dargestellt) können jeweils den Antriebsarm 27 in Richtung der Drehachse 33 der Materialrolle 17 mit einer vorgegebenen Kraft bzw. einem vorgegebenen Drehmoment vorspannen, so dass der Antriebsarm 27 dem während des Betriebs abnehmenden Durchmesser der Materialrolle 17 nachgeführt wird und der Reibeingriff zwischen dem Reibband 25 und der aufgewickelten Materialbahn 19 stets gleich groß ist.

Mit einem gestrichelten Kreis ist eine nahezu aufgebrauchte Materialrolle 17 dargestellt, deren Durchmesser nur wenig größer als der Durchmesser des Rollenkerns 113 ist. Ein oberer Antriebsarm 27 sowie ein unterer Antriebsarm 27 sind zur Veranschaulichung eines entsprechend weit in Richtung der Drehachse 33 der Materialrollen 17 geschwenkten Zustands gestrichelt dargestellt.

Der Betrieb der Abrollantriebe 21 richtet sich nach Anforderungen von der zentralen Steuereinrichtung 39. Wird in einer Spur weniger Material oder vorübergehend kein Material benötigt, kann die Abrollrate der betreffenden Spur durch Verringern der Umlaufgeschwindigkeit des Reibbandes 25 bzw. durch Abschalten des Antriebsmotors M entsprechend geändert werden. In einem Nichtantriebszustand bei ausgeschaltetem Antriebsmotor M verbleibt der betreffende Antriebsarm 27 mit seinem Reibband 25 in Reibeingriff mit der aufgewickelten Materialbahn 19, wird also nicht etwa mittels des vorstehend erwähnten Schwenkantriebs (nicht dargestellt) außer Eingriff mit der Materialrolle 17 geschwenkt. Dies hat den Vorteil, dass das Reibband 25 als Bremse für die Materialrolle 17 wirksam ist, wodurch ein trägheitsbedingtes Weiterdrehen der Materialrolle 17 verhindert wird.

Das Abnehmen der Materialbahnen 19 von den Materialrollen 17 umfasst nicht nur das Abrollen mittels der vorstehend erläuterten Abrollantriebe 21, sondern außerdem das Fördern der Materialbahnen 19 in den Schlaufenspeicher 61 hinein. Hierzu umfasst die Abnahmeeinrichtung eine Fördereinrichtung 23 die zusätzlich schematisiert oben in der Mitte der Fig. 1 dargestellt ist.

Für jede Spur S1 bis S4 umfasst die Fördereinrichtung 23 eine Förderrolle 47, die zusammen mit einer Gegenrolle 48 einen Förderspalt für die jeweilige Materialbahn 19 bildet. Alle Förderrollen 47 sitzen auf einer gemeinsamen Antriebswelle 45, werden also nur gemeinsam angetrieben, und zwar über einen gemeinsamen Antriebsmotor 41, der über einen Antriebsriemen 42 die gemeinsame Antriebswelle 45 der Förderrollen 47 in Drehung versetzt.

Der spurindividuelle Betrieb dieser Fördereinrichtung 23 wird dadurch erreicht, dass jeder Förderrolle 47 eine Rutschkupplung 43 zugeordnet ist, die zwischen der Förderrolle 47 und der gemeinsamen Antriebswelle 31 angeordnet ist. Bei den Rutschkupplungen 43 handelt es sich jeweils um eine Magnetkupplung, deren Schaltpunkt eingestellt werden kann.

Über die Steuereinrichtung 39 wird die Fördereinrichtung 23 derart betrieben, dass die Materialbahnen 19 jeweils zwischen der betreffenden Materialrolle 17 und der betreffenden Förderrolle 47 stets auf Spannung gehalten wird. Während des Betriebs kann die gemeinsame Antriebswelle 45 mit einer konstanten Drehzahl rotieren, die auf einen erwarteten Betrieb des Interleavers für das jeweilige Schneidprogramm des Slicers abgestimmt ist. Wird in einer Spur der Abrollantrieb 21 angehalten oder verringert sich die Abrollrate in einer Spur, braucht in den Betrieb der Fördereinrichtung 23 nicht aktiv eingegriffen zu werden, da eine unter die Förderrate der Fördereinrichtung 23 abfallende Abrollrate in einer Spur durch die Kupplung 43 dieser Spur abgefangen wird, ohne dass die betreffende Materialbahn 19 übermäßig beansprucht wird oder gar reißt.

Ein Vorteil dieses Konzepts besteht darin, dass die Fördereinrichtung 23 nur einen einzigen Antrieb mit Antriebsmotor 41 und Antriebsriemen 42 und lediglich eine einzige gemeinsame Antriebswelle 45 für alle Spuren S1 bis S4 benötigt und keine konstruktiven oder steuerungstechnischen Maßnahmen erforderlich sind, um einen aktiv spurindividuellen Betrieb der Fördereinrichtung 23 zu realisieren.

Wenn nicht gerade in einer der Spuren die Kupplung 43 aktiv ist und somit in dieser Spur vorübergehend kein Material in den Schlaufenspeicher 61 hinein gefördert wird, bestimmt die Förderrate der Fördereinrichtung 23 die in jeder Spur pro Zeiteinheit in den Schlaufenspeicher 61 gelangende Bahnlänge. Da letztlich der über die Steuereinrichtung 39 gesteuerte Betrieb der einzelnen Abrollantriebe 21 darüber entscheidet, ob und wieviel Material pro Zeiteinheit in den einzelnen Spuren von der jeweiligen Materialrolle 17 abgerollt wird, sind die einzelnen Förderraten in den Schlaufenspeicher 61 hinein letztlich durch die einzelnen Abrollraten bestimmt.

Der spurbezogene Materialbedarf im Schneidbereich wird von der Steuereinrichtung 39 ermittelt und durch eine entsprechende spurbezogene Ansteuerung der Abrollantriebe 21 sichergestellt. Der Schlaufenspeicher 61 sorgt in jeder Spur für eine Entkopplung zwischen der trägen Materialrolle 17 einerseits und der hochdynamischen Ausgabeeinrichtung 71 andererseits, die im Takt des Schneidmessers 51 jeweils kurzfristig eine der Länge des jeweils benötigten Zwischenblatts 15 entsprechende Bahnlänge ausgeben muss. Ein derart hochdynamisches taktweises Ausstoßen von relativ langen Materialabschnitten wäre mit einem Abziehen der Materialbahn 19 unmittelbar von der Materialrolle 17 unvereinbar.

Die Steuereinrichtung 39 sorgt deshalb dafür, dass in jeder Spur zu jedem Zeitpunkt eine für einen störungsfreien Ausgabebetrieb der Ausgabeeinrichtung 71 ausreichend große Bahnlänge im Schlaufenspeicher 61 zur Verfügung steht, indem für eine stets ausreichend große Materialschlaufe 20 im Schlaufenspeicher 61 gesorgt wird.

Die Bildung und Aufrechterhaltung dieser Materialschlaufen 20 in den einzelnen Spuren wird zum einen durch einen ausreichend großen "Nachschub" mittels der Abnahmeeinrichtung, also der Abrollantriebe 21 und der Fördereinrichtung 23, und zum anderen durch einen Luftkreislauf mit einer kombinierten Saug- und Blaseinrichtung 63, 65 erzielt.

Ein zu dieser kombinierten Saug- und Blaseinrichtung 63, 65 gehörendes Gebläse 64 ist mit seiner Saugseite über eine Saugleitung 66 an ein Unterdruckgehäuse 68 angeschlossen, in welchem mehrere, innerhalb des Gehäuses 68 strömungstechnisch voneinander getrennte Unterdruckkammern 69 ausgebildet sind. Mittels nicht dargestellter Sensoren kann der Druck in jeder Unterdruckkammer 69 gemessen und der Steuereinrichtung 39 zur Verfügung gestellt werden.

Zu einem Schlaufenbereich des Schlaufenspeichers 61 hin ist das Gehäuse 68 durch eine gekrümmte Anlagefläche 67 begrenzt, in der Öffnungen ausgebildet sind, über welche Luft aus dem Schlaufenbereich in die einzelnen Unterdrucckammern 69 gelangen kann, wie es durch die kleinen Pfeile angedeutet ist. Die Unterdruckkammern 69 sind jeweils an die Saugleitung 66 und somit an die Saugseite des Gebläses 64 angeschlossen, das mit seiner Druckseite in den Schlaufenbereich hinein gerichtet ist, wie es in Fig. 1 durch den Pfeil angedeutet ist.

Dieser Luftkreislauf bewirkt, dass stets eine bestimmungsgemäße Materialschlaufe 20 geformt wird und die Materialbahn 19 bestimmungsgemäß an der Anlagefläche 67 des Unterdruckgehäuses 68 anliegt. Da die Materialbahn 19 aufgrund des in den Unterdruckkammern 69 herrschenden Unterdrucks gegen die Anlagefläche 67 gesaugt wird, dient die Anlagefläche 67 gleichzeitig als Bremse für die Materialbahnen 19. Hierdurch werden die Materialbahnen 19 stets unter leichter Spannung gehalten, wodurch verhindert wird, dass sich die Materialbahnen 19 aufstauchen, wenn die im Schneidtakt arbeitende Ausgabeeinrichtung 71 die Materialbahnen 19 hochdynamisch aus dem Schlaufenspeicher 61 herauszieht. Die Bremswirkung der Anlagefläche 67 bzw. der Unterdruckkammern 69 ist dabei derart eingestellt, dass dieser hochdynamische Entnahmeprozess nicht beeinträchtigt wird.

Mittels der erwähnten Drucksensoren in den Unterdruckkammern 69 kann die Steuereinrichtung 39 erkennen, welche Unterdruckkammer 69 von der Materialbahn 19 bedeckt ist und welche nicht. Aus diesen Informationen kann auf einfache Weise mit ausreichender Genauigkeit ein Maß für die momentane Größe der Materialschlaufe 20 im Schlaufenbereich des Schlaufenspeichers 61 abgeleitet werden. In Fig. 1 ist die gestrichelt gezeichnete Materialbahn 19 mit einer maximalen Schlaufengröße dargestellt. Durch eine gepunktete Linie ist der Verlauf der Materialbahn 19 mit minimaler Schlaufengröße angedeutet, bei der nur noch die oberste Unterdruckkammer 69 teilweise von der Materialbahn 19 abgedeckt ist.

Die Steuerung 39 kann gemäß der so ermittelten individuellen Schlaufengrößen spurindividuell die einzelnen Abrollantriebe 21 aktivieren oder deaktivieren bzw. die einzelnen Abrollraten durch entsprechende Ansteuerung der Motoren M1 bis M4 verändern, um sicherzustellen, dass für jede Spur zu jedem Zeitpunkt eine ausreichend große Materialschlaufe 20 vorhanden ist, um die vorstehend erläuterte Entkopplung zwischen der betreffenden Spur der Ausgabeeinrichtung 71 und der zugehörigen Materialrolle 17 aufrechtzuerhalten.

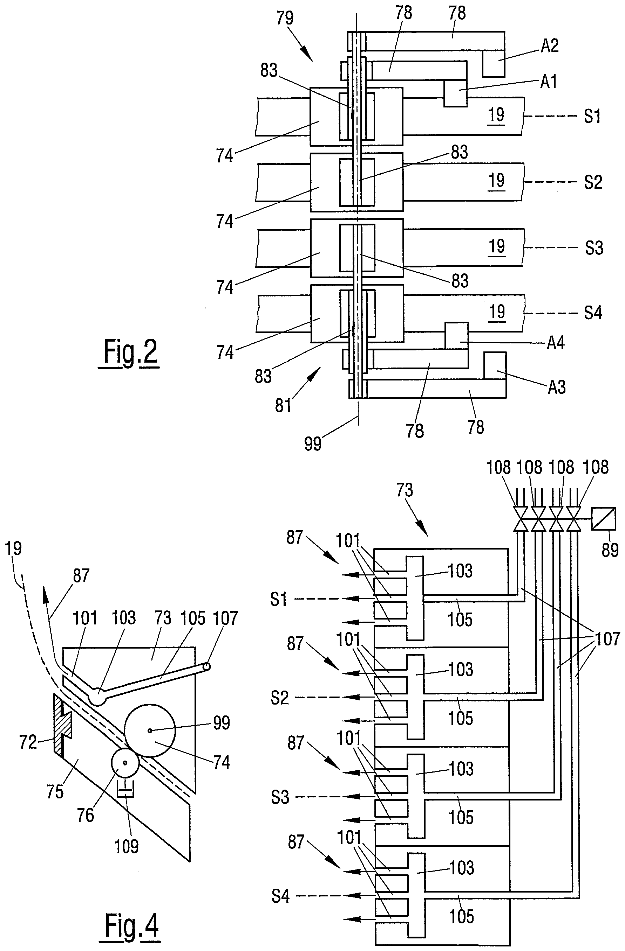

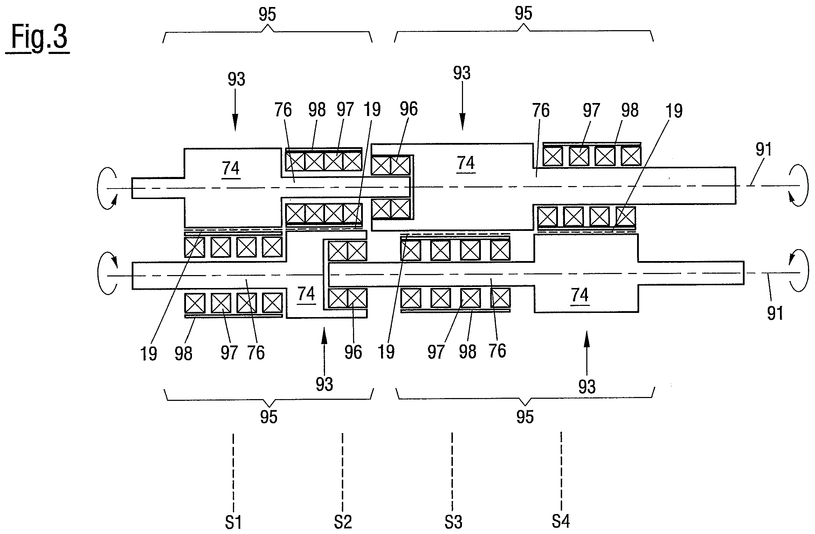

Die Ausgabeeinrichtung 71 ist ebenfalls zu einem spurindividuellen Betrieb ausgebildet. Hierzu umfasst eine Vorschubeinheit 73 für jede der Spuren S1 bis S4 eine Vorschubwalze 74, wie nachstehend anhand zweier möglicher Ausführungsbeispiele gemäß den Fig. 2 und 3 näher erläutert wird. Die Vorschubwalzen 74 besitzen eine gemeinsame Drehachse 99, wobei für jede Vorschubwalze 74 ein eigener Antriebsmotor A1, A2, A3 bzw. A4 vorgesehen ist, der über einen Antriebsriemen 78 mit einer Antriebswelle 83 (vgl. Fig. 2) zusammenwirkt, mit der die betreffende Vorschubwalze 74 drehfest verbunden ist.

Wie Fig. 2 zeigt, werden die beiden Vorschubwalzen 74 für die Spuren S1 und S2 über einen rechten Koaxialwellenantrieb 79 angetrieben, während ein linker Koaxialwellenantrieb 81 die beiden Vorschubwalzen 74 der anderen beiden Spuren S3 und S4 antreibt. Die jeweils innenliegende Vorschubwalze 74 wird über eine innenliegende Antriebswelle 83 angetrieben, wohingegen die jeweils außenliegende Vorschubwalze 74 über eine die innenliegende Antriebswelle 83 umgebende Hohlwelle 83 angetrieben wird.

Auf diese Weise lässt sich ein spurindividueller Antrieb von vier auf einer gemeinsamen Drehachse 99 nebeneinander angeordneten Vorschubwalzen 74 für die Vorschubeinheit 73 der Ausgabeeinrichtung 71 realisieren.

Eine alternative Ausgestaltung für einen Vierspurantrieb mit vier individuell antreibbaren Vorschubwalzen 74 ist schematisch in Fig. 3 dargestellt. Hier sind zwei parallel verlaufende Drehachsen 91 vorgesehen, wobei auf jeder der beiden Achsen 91 jeweils zwei Zweispureinheiten 95 nebeneinander angeordnet sind. Jede Zweispureinheit 95 umfasst eine Vorschubwalze 74 und eine Andrückrolle 76, die drehfest miteinander verbunden sind und beispielsweise einstückig miteinander ausgebildet sein können. Jede Vorschubwalze 74 wirkt unmittelbar mit einer jeweiligen Materialbahn 19 zusammen, während die mitrotierende Andrückrolle 76 mit einer Freilauffunktion bezüglich der Materialbahn 19 in ihrer Spur versehen ist. Die Freilauffunktion ist dadurch realisiert, dass die Andrückrolle 76 über ein Wälzlager 97 eine frei drehbare Andrückhülse 98 für die Materialbahn 19 trägt.

Für jede der Spuren S1 bis S4 bilden also eine Vorschubwalze 74 auf der einen Achse 91 und eine Andrückeinheit aus Andrückrolle 76 und Andrückhülse 98 auf der anderen Achse 91 ein Paar 93, das einen Vorschubspalt für die betreffende Materialbahn 19 bildet.

Jede Zweispureinheit 95 kann beispielsweise über einen nicht dargestellten Antriebsriemen mittels eines zugehörigen Antriebsmotors (nicht dargestellt) um die jeweilige Achse 91 gedreht werden, wobei die beiden Achsen 91 mit entgegengesetztem Drehsinn angetrieben werden. Benachbarte Zweispureinheiten 95 auf einer gemeinsamen Achse 91 sind relativ zueinander verdrehbar. Hierzu greift jeweils eine axiale Verlängerung einer Andrückrolle 76 in eine stirnseitige Vertiefung der benachbarten Vorschubwalze 74 ein, an der die Verlängerung der Andrückrolle 76 in radialer Richtung durch ein Wälzlager 96 abgestützt ist.

Durch diese Anordnung ist ein spurindividueller Vorschub für vier nebeneinanderliegende Spuren S1 bis S4 als eine besonders kompakte Einheit realisiert, in welche die den einzelnen Vorschubwalzen 74 zugeordneten Gegeneinheiten bzw. Andrückeinheiten 76, 98 integriert sind. Eine Aufteilung in eine Vorschubeinheit einerseits und eine Gegeneinheit andererseits wie beim Ausführungsbeispiel gemäß den Fig. 1 und 2 ist hier folglich nicht vorgesehen.

Wie Fig. 1 zeigt, ist bei dem hier dargestellten Ausführungsbeispiel zusätzlich zu der Vorschubeinheit 73 mit den vier spurindividuell antreibbaren Vorschubwalzen 74 eine Gegeneinheit 75 vorgesehen. Die Gegeneinheit 75 kann für jede Vorschubwalze 74 zumindest eine zugehörige Andrückrolle 76 aufweisen, die elastisch oder federnd gelagert ist, wie in Fig. 1 schematisch durch die Federung 77 und in Fig 4 schematisch durch eine als Federung ausgebildete Kolben/ZylinderAnordnung 109 angedeutet ist.

Alternativ kann die Gegeneinheit 75 eine Vielzahl von längs einer parallel zur Drehachse 99 der Vorschubwalzen 74 verlaufenden Achse verteilt angeordneten Gegenelementen insbesondere in Form von individuell federnd gelagerten Andrückwalzen oder Andrückrollen jeweils mit einem gegenüber den Vorschubwalzen 74 kleinen Durchmesser aufweisen. Diese nicht angetriebenen Gegenelemente bilden mit jeder der Vorschubwalzen 74 einen Vorschubspalt für eine der Materialbahnen 19. Derartige Gegeneinheiten oder Andrückeinheiten für Ausgabeeinrichtungen von Interleavern sind grundsätzlich bekannt, weshalb hierauf nicht näher eingegangen zu werden braucht.

Wie die Darstellung unten links in Fig. 1 schematisch zeigt, besteht eine Besonderheit der Ausgabeeinrichtung 71 darin, dass die Vorschubeinheit 73 und die Gegeneinheit 75 zusammen mit einer auch als Schneidbrille, Formschale oder Gegenmesser bezeichneten Schneidkante 85 an einer stationären Aufnahme 70 angebracht sind, die an einem Maschinengestell 115 des Slicers befestigt ist.

Die Aufnahme 70 und die Komponenten Gegeneinheit 75, Vorschubeinheit 73 und Schneidkante 85 sind derart miteinander korrespondierend ausgebildet, dass diese Komponenten ausschließlich in einer einzigen Reihenfolge an der Aufnahme 70 werkzeuglos montiert werden können.

Dabei wird zuerst die Gegeneinheit 75 an der Aufnahme 70 angeordnet. Durch anschließendes Anbringen der Vorschubeinheit 73 wird die Gegeneinheit 75 in ihrer Sollposition fixiert und gesichert. Die Anbringung der Vorschubeinheit 73 erfordert eine kombinierte Dreh-/Schwenkbewegung in eine Endposition, die - wie durch den Pfeil in der großen Darstellung der Fig. 1 angedeutet - zur Folge hat, dass beim Anbringen der Vorschubeinheit 73 alle Antriebsriemen 78 der Antriebsmotoren A1 bis A4 gleichzeitig gespannt werden, die zuvor im entspannten Zustand um die zu beiden Seiten vorstehenden Antriebswellen 83 der Vorschubwalzen 74 gelegt worden sind. Entsprechend werden bei der Entnahme der Vorschubeinheit 73 die Antriebsriemen 78 automatisch entspannt.

Zuletzt wird die Schneidkante 85 an der Aufnahme 70 angebracht. Die Schneidkante 85 wiederum positioniert und sichert die Vorschubeinheit 73 in ihrer Sollposition. Eine Spanneinrichtung 117, die zwei pneumatisch relativ zur Aufnahme 70 - wie durch die beiden Doppelpfeile angedeutet - verstellbare Spannbolzen 117 umfasst, positioniert und sichert abschließend die Schneidkante 85 und damit alle drei Komponenten Gegeneinheit 75, Vorschubeinheit 73 und Schneidkante 85 an der Aufnahme 70.

Die Aufnahme 70 kann darüber hinaus zur Anbringung weiterer Einrichtungen dienen. So kann es z.B. in der Praxis erforderlich sein, den sogenannten Schneidspalt zwischen dem Schneidmesser 51 und der Schneidkante 85 auf einen bestimmten Wert einzustellen. In diesem Zusammenhang können Sensoren wie z.B.

Schwingungssensoren eingesetzt werden, die an der Aufnahme 70 angebracht oder in die Aufnahme 70 integriert werden können.

Auf diese Weise ist eine einfache und zuverlässige werkzeuglose Montage und Demontage der drei genannten Komponenten realisiert.

Mittels der Spannbolzen 117 kann zudem eine Abfrage durch die Steuereinrichtung 39 erfolgen und erkannt werden, ob überhaupt eine Schneidkante 85 vorhanden ist und ob - in Abhängigkeit von dem jeweils eingestellten Schneidprogramm - die richtige Schneidkante 85 montiert worden ist. Bei fehlender Schneidkante 85 beispielsweise fahren die Spannbolzen 117 weiter aus als bei vorhandener korrekter Schneidkante 85 - diese Fehlpositionierung der Spannbolzen 117 kann von der Steuereinrichtung 39 erkannt werden.

Wie vorstehend bereits erläutert, erfolgt das Ausstoßen der Materialbahn 19 mittels der Ausgabeeinrichtung 71 derart, dass das vordere Ende der Materialbahn 19 vor der Schnittfläche des jeweiligen Produktes 11 liegt, damit es zusammen mit der als nächstes abzutrennenden Scheibe 13 von der Materialbahn 19 mittels des Schneidmessers 51 abgeschnitten und so ein Zwischenblatt 15 bilden kann.

Um das vordere Ende der Materialbahn 19 in diesem Sinne zu beeinflussen, wird mittels einer Luftströmung in dem Bereich zwischen der Materialbahn 19 und der Schnittfläche des Produkts 11 ein Unterdruck erzeugt, der bewirkt, dass sich das vordere Ende der Materialbahn 19 gegen die Schnittfläche legt. Dieses Konzept ist grundsätzlich bekannt. Die Luftströmung kann z.B. dadurch erzeugt werden, dass Druckluft über einen sich quer zur Materialbahn 19 erstreckenden Spalt oder über mehrere in Querrichtung verteilt angeordnete Öffnungen ausgestoßen wird.

Wie Fig. 4 zeigt, wird erfindungsgemäß über die Vorschubeinheit 73 für jede der Spuren S1 bis S4 eine individuell variierbare Luftströmung 87 erzeugt, so dass die freien Enden der einzelnen Materialbahnen 19 spurindividuell beeinflusst werden können. Die einzelnen Luftströmungen 87 können in zeitlicher Hinsicht sowie hinsichtlich ihrer Stärke spurindividuell variiert werden.

Dies wird dadurch erreicht, dass im vorderen Bereich der Vorschubeinheit 73 oberhalb des von der Vorschubeinheit 73 und der Gegeneinheit 75 gebildeten Austrittsspalts für die einzelnen Materialbahnen 19 für jede Spur S1 bis S4 mehrere Austrittsöffnungen quer zur jeweiligen Materialbahn 19 verteilt angeordnet sind.

Jede Austrittsöffnung gehört zu einem in der Vorschubeinheit 73 ausgebildeten Auslasskanal 101, wobei alle Auslasskanäle 101 von einem gemeinsamen Verteilerraum 103 ausgehen, der über einen Einlasskanal 105 und eine Zufuhrleitung 107 mit einer nicht dargestellten Druckluftquelle in Verbindung steht. Jede Zufuhrleitung 107 ist mit einem steuerbaren Ventil 108 versehen. Die Ventile 108 können über eine Stelleinrichtung 89 spurindividuell angesteuert werden.

Hierdurch können für jede der Spuren S1 bis S4 das zeitliche Verhalten und die Stärke der jeweiligen Luftströmung 87 unabhängig von den jeweils anderen Spuren variiert werden.

Bei der in Fig. 4 außerdem dargestellten Leiste 72 handelt es sich um ein auswechselbares Verschleißteil bevorzugt aus Kunststoff, das als mit dem Schneidmesser 51 beim Durchtrennen der einzelnen Materialbahnen 19 zusammenwirkende Schneidkante dient.

Der Interleaver kann dazu ausgebildet sein, in jeder der einzelnen Spuren S1 bis S4 aufeinanderfolgende Materialbahnen 19 automatisch miteinander zu verbinden. In Fig. 1 sind schematisch mögliche Positionen dargestellt, an denen eine in den Interleaver integrierte Verbindungseinrichtung V angeordnet werden kann.

In Fig. 1 nicht dargestellt ist eine Wechseleinrichtung, die dazu ausgebildet ist, eine jeweils genutzte Materialrolle 17 automatisch gegen eine zu nutzende Materialrolle 17 zu wechseln. Die Wechseleinrichtung kann außerhalb des Interleavers angeordnet oder wenigstens zum Teil in den Interleaver integriert sein. Für jede der Spuren S1 bis S4 kann eine eigene Wechseleinrichtung vorgesehen sein. Alternativ können mehrere Spuren oder alle Spuren eine gemeinsame Wechseleinrichtung aufweisen.

Eine Mehrspurigkeit des Interleavers kann auch dadurch realisiert werden, dass für mehrere Spuren S eine gemeinsame, drehbar gelagerte Materialrolle 17 vorgesehen ist, wobei für die Materialbahn 19 dieser gemeinsamen Materialrolle 17 eine Einrichtung T zum Teilen der Materialbahn 19 in mehrere einzelne Materialbahnen 19 vorgesehen ist. Eine mögliche Position, an der eine solche, in den Interleaver integrierte Teilungseinrichtung T angeordnet werden kann, ist in Fig. 1 schematisch angedeutet. Für diese Spuren S, d.h. für die betreffende Materialrolle 17, ist dann lediglich ein Abrollantrieb 21 vorgesehen.

Dabei ist es z.B. möglich, dass ein vierspuriger Interleaver dadurch realisiert wird, dass zwei Materialrollen 17 vorgesehen sind, denen jeweils ein Abrollantrieb 21 und eine Teilungseinrichtung T zugeordnet sind, d.h. aus deren Materialbahn 19 jeweils zwei einzelne Materialbahnen 19 entstehen, so dass an die den Teilungseinrichtungen T nachgeordneten Einrichtungen vier einzelne Materialbahnen 19 wie in dem Fall gelangen, dass für jede Spur S eine eigene Materialrolle 17 und keine Teilungseinrichtung T vorgesehen ist.

Unterschiedliche Kombinationen sind denkbar. So kann z.B. bei einem vierspurigen Interleaver für zwei Spuren jeweils eine eigene Materialrolle und für zwei wietere Spuren eine gemeinsame Materialrolle und eine Teilungseinrichtung vorgesehen sein.

Bei dem erfindungsgemäßen Interleaver ist folglich eine durchgehend spurindividuelle Handhabung der einzelnen Materialbahnen 19 möglich, so dass der Interleaver mittels der Steuereinrichtung 39 in Abhängigkeit von dem Schneidprozess derart betrieben werden kann, dass der spurindividuelle Interleaverbetrieb perfekt auf den spurindividuellen Schneidbetrieb abgestimmt werden kann.

Der Vollständigkeit halber ist noch zu erwähnen, dass auch ein einspurig ausgebildeter oder vorübergehend einspurig betriebener Interleaver einen Abrollantrieb aufweisen kann, wie er vorstehend jeweils für eine der Spuren S1 bis S4 beschrieben ist.

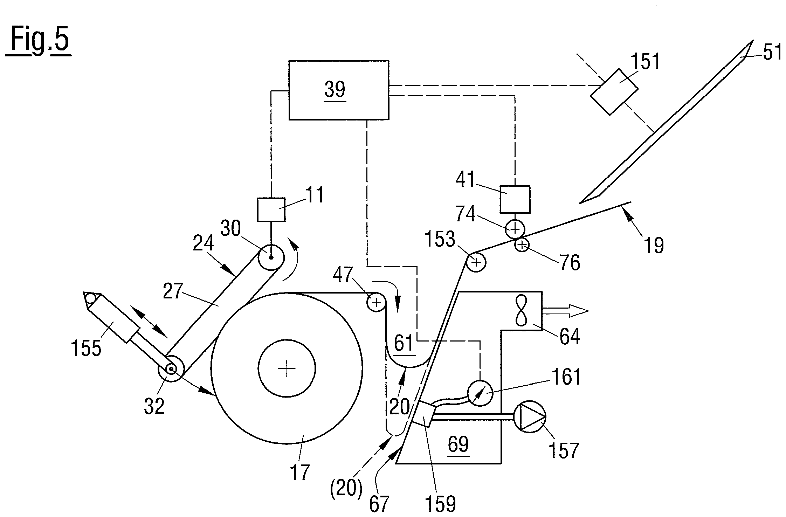

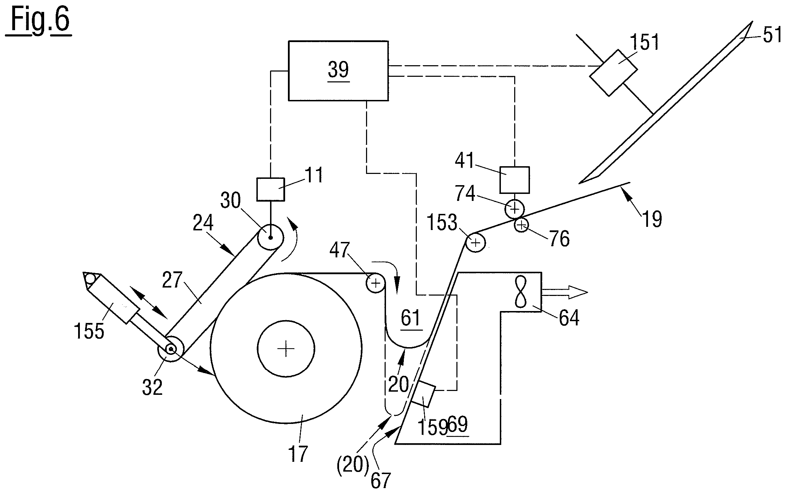

Mit Ausnahme der nachstehend beschriebenen Unterschiede entsprechen die in Fig. 5 und 6 dargestellten Ausführungsbeispiele jeweils dem Ausführungsbeispiel der Fig. 1. Einander entsprechende Bestandteile, für welche die gleichen Bezugsziffern verwendet werden, werden daher nicht näher erläutert. Diesbezüglich wird auf die Ausführungen zu Fig. 1 und - soweit anwendbar - auch auf die Ausführungen zu den Fig. 2, 3 und 4 verwiesen.

Die Fig. 5 und 6 zeigen jeweils eine Möglichkeit, das Erreichen einer vorgegebenen maximalen Schlaufengröße im Schlaufenspeicher 61 zu detektieren, und zwar jeweils mittels eines für die betreffende Spur vorgesehenen, auch als Schlaufendetektor bezeichneten Sensors 159. Für jede Spur ist ein derartiger Sensor 159 vorgesehen. Die Sensoren 159 sind in Querrichtung z.B. nebeneinander angeordnet und können, insbesondere zur Spurausrichtung, in Querrichtung verstellbar sein.

Auf die entsprechenden Ausführungen im Einleitungsteil zu dieser Schlaufendetektion bzw. Schlaufengrößenbestimmung wird ergänzend verwiesen.

Gemäß Fig. 5 umfasst der Sensor 159 einen Messraum, der zur Anlagefläche 67 der Unterdruckkammer 69 hin offen ist und hierzu beispielsweise eine Messöffnung aufweist, die alternativ von einer der in der Anlagefläche 67 ausgebildeten Öffnungen gebildet sein kann. An den Messraum sind eine Unterdruckquelle 157 z.B. in Form einer Vakuumpumpe und ein als Druckmesser 161 ausgebildetes Messgerät angeschlossen. Der Druckmesser 161 kommuniziert mit der Steuerung 39.

Erreicht die Schlaufe 20 im Schlaufenspeicher 61 eine bestimmte Größe, wird gemäß Fig. 5 die insofern als sensitiver Teil des Sensors 159 wirksame Messöffnung des Sensors 159 zumindest teilweise verschlossen und wird gemäß Fig. 6 der z.B. kapazitiv arbeitende sensitive Teil des Sensors 159 berührt, und zwar jeweils von der gegen die Anlagefläche 67 gesaugten, die Schlaufe 20 bildenden Materialbahn 19.

Gemäß Fig. 5 verringert sich daraufhin im Messraum der Druck, so dass diese Druckdifferenz bzw. die Detektion der Druckdifferenz an die Steuerung 39 kommuniziert werden kann. Gemäß Fig. 6 kommuniziert der Sensor 159 ebenfalls das Ansprechen des sensitiven Teils des Sensors 159 auf die Materialbahn 19 an die Steuerung 39.

Beim Ausführungsbeispiel gemäß Fig. 6 können der Druckmesser 161 und/oder die Unterdruckquelle 157 auch in den Sensor 159 integriert sein.

In Fig. 5 und Fig. 6 jeweils ein Antriebsmotor 151 für das Schneidmesser 51 sowie eine dem Schlaufenspeicher 61 nachgeordnete Umlenkrolle 153 für jede der Materialbahnen 19 dargestellt.

### Bezugszeichenliste

- 11: Produkt
- 13: Scheibe
- 15: Zwischenblatt
- 17: Materialrolle
- 19: Materialbahn
- 20: Schlaufe
- 21: Abrollantrieb
- 23: Fördereinrichtung
- 24: Antriebsriemen
- 25: Reibband, Antriebsorgan
- 27: Antriebsarm
- 28: Schwenkachse
- 29: Drehachse der Antriebswellen
- 30: Antriebsrolle
- 31: Antriebswelle
- 32: Umlenkrolle
- 33: Drehachse der Materialrollen
- 35: oberer Koaxialwellenantrieb
- 37: unterer Koaxialwellenantrieb
- 39: Steuereinrichtung
- 41: Antrieb der Fördereinrichtung
- 42: Antriebsriemen
- 43: Kupplung
- 45: Antriebswelle
- 46: Produkthalter
- 47: Förderrolle
- 48: Gegenrolle
- 49: Produktzufuhr
- 50: Schneidebene
- 51: Schneidmesser
- 53: Produktauflage
- 55: Portionierband
- 61: Schlaufenspeicher
- 63: Saugeinrichtung, Bremse
- 64: Gebläse
- 65: Blaseinrichtung
- 66: Saugleitung
- 67: Anlagefläche
- 68: Gehäuse
- 69: Unterdruckkammer
- 70: Aufnahme
- 71: Ausgabeeinrichtung
- 72: Leiste
- 73: Vorschubeinheit
- 74: Vorschubwalze
- 75: Gegeneinheit
- 76: Andrückrolle
- 77: Federung
- 78: Antriebsriemen
- 79: rechter Koaxialwellenantrieb
- 81: linker Koaxialwellenantrieb
- 83: Antriebswelle
- 85: Schneidkante
- 87: Druckluftströmung
- 89: Stelleinrichtung
- 91: gemeinsame Achse
- 93: Paar
- 95: Zweispureinheit
- 96: Wälzlager
- 97: Wälzlager
- 98: Andrückhülse
- 99: gemeinsame Drehachse
- 101: Auslasskanal
- 103: Verteilerraum
- 105: Einlasskanal
- 107: Zufuhrleitung
- 108: Ventil
- 109: Kolben/Zylinder-Anordnung
- 111: Schacht
- 113: Rollenkern
- 115: Maschinengestell
- 117: Spannbolzen
- 151: Antriebsmotor für Schneidmesser
- 153: Umlenkrolle
- 155: Schwenkantrieb
- 157: Unterdruckquelle
- 159: Sensor
- 161: Messgerät

## Patentansprüche

1. Vorrichtung zum einspurigen oder mehrspurigen Bereitstellen von bahnförmigem Zwischenblattmaterial an einem Schneidbereich, in welchem einspurig oder mehrspurig zugeführte Produkte (11) in Scheiben (13) geschnitten und Zwischenblätter (15) eingebracht werden, die im Schneidbereich von dem bereitgestellten Zwischenblattmaterial abgetrennt werden,
mit einem Materialvorrat, und
mit einer Abnahmeeinrichtung (21, 23), die zu einem Abnehmen der Materialbahn (19) von dem Materialvorrat ausgebildet ist, und
wobei für die Materialbahn (19) ein Schlaufenspeicher (61) vorgesehen ist, in welchem die Materialbahn (19) eine Schlaufe (20) bildet,
**dadurch gekennzeichnet,**
**dass** wenigstens ein Sensor (159) zur Detektion der Schlaufe (20), insbesondere des unteren Schlaufenendes, sowie Mittel zum Bewegen der Materialbahn (19) gegen eine Anlagefläche (67) vorgesehen sind, in die zumindest ein Teil des Sensors (159) integriert ist, und
**dass** der Sensor (159) derart ausgebildet ist, dass die Schlaufe (20) nur dann detektiert wird, wenn die Materialbahn (19) im Bereich des in die Anlagefläche (67) integrierten Teils des Sensors (159) an der Anlagefläche (67) anliegt.

2. Vorrichtung nach Anspruch 1,
wobei der Sensorteil ein bezüglich der Materialbahn (19) sensitiver Teil des Sensors (159) ist, der auf die Gegenwart der Materialbahn (19) anspricht, und/oder wobei der Sensor (159) oder der in die Anlagefläche (67) integrierte Sensorteil derart angeordnet ist, dass die Schlaufe (20) erst dann erkannt wird, wenn die Schlaufe (20) eine vorgegebene maximale Schlaufengröße erreicht hat.

3. Vorrichtung nach Anspruch 1 oder 2,
wobei der Sensor (159) oder der in die Anlagefläche (67) integrierte Sensorteil auf eine Berührung mit der Materialbahn (19) reagiert, insbesondere wobei der Sensor (159) oder der Sensorteil kapazitiv, induktiv, elektromechanisch und/oder elektrostatisch wirksam ist.

4. Vorrichtung nach Anspruch 1 oder 2,
wobei die Anlagefläche (67) eine Unterdruckkammer (69) begrenzt, wobei der Sensor (159) einen eigenen, insbesondere im Vergleich zur Unterdruckkammer (69) relativ kleinen, Messraum umfasst, an den eine Unterdruckquelle (157) und ein Druckmessgerät (161) angeschlossen sind, wobei als in die Anlagefläche (67) integrierter Teil des Sensors (159) eine Messöffnung in der Anlagefläche (67) vorgesehen ist, die mit dem Messraum des Sensors (159) kommuniziert, und
wobei das Druckmessgerät (161) dazu ausgebildet ist, eine Druckänderung in dem Messraum zu erfassen, sobald die Messöffnung zumindest teilweise von der angesaugten und dadurch zur Messöffnung hin bewegten Materialbahn (19) verschlossen wird und der Druck innerhalb des von der Unterdruckquelle (157) beaufschlagten Messraums sinkt.

5. Vorrichtung nach Anspruch 4,
wobei die Anlagefläche (67) luftdurchlässig ist,
wobei an die Unterdruckkammer (69) eine Saugeinrichtung angeschlossen ist oder wobei die Unterdruckkammer (69) zu einer Saugeinrichtung (63) gehört.

6. Vorrichtung nach einem der vorhergehenden Ansprüche,
wobei die Vorrichtung zu einem mehrspurigen Bereitstellen von Zwischenblattmaterial ausgebildet ist und wobei für jede Materialbahn (19) ein Schlaufendetektor (159) vorgesehen ist, wobei die einzelnen Schlaufendetektoren (159) unabhängig voneinander betrieben werden können, insbesondere wobei die Schlaufendetektoren (159) in Querrichtung verstellbar sind.

7. Vorrichtung nach einem der vorhergehenden Ansprüche,
wobei eine Einrichtung zur Bestimmung eines Maßes für die Schlaufengröße, insbesondere für die untere und/oder obere Position der Schlaufe (20), vorgesehen ist.

8. Vorrichtung nach Anspruch 7,
wobei als ein Maß für die Schlaufengröße das Erreichen einer vorgegebenen minimalen Schlaufengröße, insbesondere einer oberen Position der Schlaufe (20), und/oder das Erreichen einer vorgegebenen maximalen Schlaufengröße, insbesondere einer unteren Position der Schlaufe (20), vorgesehen ist.

9. Vorrichtung nach Anspruch 7 oder 8,
wobei durch eine interne oder externe Steuereinrichtung (39) die pro Zeiteinheit in den Schlaufenspeicher (61) gelangende Bahnlänge in Abhängigkeit von der Schlaufengröße steuerbar ist, insbesondere wobei die Abnahmeeinrichtung (21, 23) durch die Steuereinrichtung (39) in Abhängigkeit von der Schlaufengröße steuerbar ist.

10. Vorrichtung nach einem der vorhergehenden Ansprüche,
wobei eine Saugeinrichtung (63) eine Außenseite der Materialschlaufe (20) und eine Blaseinrichtung (65) eine Innenseite der Materialschlaufe (20) beaufschlagt, oder umgekehrt, insbesondere wobei die Saugeinrichtung (63) und die Blaseinrichtung (65) zu einem gemeinsamen Luftkreislauf gehören, insbesondere wobei durch eine interne oder externe Steuereinrichtung (39) der Luftkreislauf, insbesondere die Stärke und/oder die Richtung einer Luftströmung, in Abhängigkeit von der Schlaufengröße einstellbar und/oder steuerbar ist.

11. Vorrichtung nach einem der vorhergehenden Ansprüche,
wobei die Abnahmeeinrichtung (21, 23) derart steuerbar ist, dass das Abnehmen der Materialbahn (19) bei Erreichen einer vorgegebenen minimalen Schlaufengröße gestartet und bei Erreichen einer vorgegebenen maximalen Schlaufengröße beendet wird, und/oder wobei die Abnahmeeinrichtung (21, 23) derart steuerbar ist, dass die pro Zeiteinheit in den Schlaufenspeicher (61) gelangende Bahnlänge in Abhängigkeit von der Schlaufengröße kontinuierlich, insbesondere rampenartig, veränderbar ist.

12. Vorrichtung zum einspurigen oder mehrspurigen Aufschneiden von Lebensmittelprodukten (11), insbesondere Hochgeschwindigkeitsslicer,
mit einer Produktzufuhr (49), die aufzuschneidende Produkte (11) einspurig oder mehrspurig einem Schneidbereich zuführt, in welchem sich ein Schneidmesser (51) rotierend und/oder umlaufend bewegt, um die zugeführten Produkte (11) in Scheiben (13) zu schneiden, und
mit einer Vorrichtung zum Bereitstellen von bahnförmigem Zwischenblattmaterial nach einem der vorhergehenden Ansprüche.

13. Vorrichtung nach Anspruch 12,
wobei eine gemeinsame Steuereinrichtung (39) vorgesehen ist, die dazu ausgebildet ist, das Aufschneiden der Produkte (11) und das Bereitstellen des Zwischenblattmaterials zu koordinieren.

14. Verfahren zum einspurigen oder mehrspurigen Bereitstellen von bahnförmigem Zwischenblattmaterial an einem Schneidbereich, insbesondere mit einer Vorrichtung nach einem der Ansprüche 1 bis 11, wobei in dem Schneidbereich einspurig oder mehrspurig zugeführte Produkte (11) in Scheiben (13) geschnitten und Zwischenblätter (15) eingebracht werden, die im Schneidbereich von dem bereitgestellten Zwischenblattmaterial abgetrennt werden, und wobei von zumindest einem Materialvorrat mittels einer Abnahmeeinrichtung (21, 23) wenigstens eine Materialbahn (19) abgenommen wird, die in einem Schlaufenspeicher (61) eine Schlaufe (20) bildet,
**dadurch gekennzeichnet,**
**dass** wenigstens ein Sensor (159) zur Detektion der Schlaufe (20), insbesondere des unteren Schlaufenendes, sowie Mittel zum Bewegen der Materialbahn (19) gegen eine Anlagefläche (67) vorgesehen sind, in die zumindest ein Teil des Sensors (159) integriert ist, und
**dass** der Sensor (159) derart ausgebildet ist, dass die Schlaufe (20) nur dann detektiert wird, wenn die Materialbahn (19) im Bereich des in die Anlagefläche (67) integrierten Teils des Sensors (159) an der Anlagefläche (67) anliegt.

15. Verfahren nach Anspruch 14,
wobei eine Einrichtung zur Bestimmung eines Maßes für die Schlaufengröße, insbesondere für die untere und/oder obere Position der Schlaufe (20), vorgesehen ist,
wobei als ein Maß für die Schlaufengröße das Erreichen einer vorgegebenen minimalen Schlaufengröße, insbesondere einer oberen Position der Schlaufe (20), und/oder das Erreichen einer vorgegebenen maximalen Schlaufengröße, insbesondere einer unteren Position der Schlaufe (20), vorgesehen ist, und/oder wobei als ein Maß für die Schlaufengröße der variierende Einfluss der Materialschlaufe (20) auf eine Saugeinrichtung (63) vorgesehen ist, und/oder wobei als ein Maß für die Schlaufengröße das Ergebnis einer Unterdruckmessung in einer oder mehreren Unterdruckkammern (69) vorgesehen ist, und/oder wobei die Anlagefläche luftdurchlässig ist und als ein Maß für die Schlaufengröße der variierende Einfluss der Materialschlaufe (20) auf die luftdurchlässige Anlagefläche (67) vorgesehen ist, und/oder wobei als ein Maß für die Schlaufengröße das Ergebnis einer Positionsbestimmung der Materialschlaufe (20) vorgesehen ist.

## Claims

1. An apparatus for a single-track or multitrack provision of web-like interleaved sheet material at a cutting region in which products (11) supplied on one track or on multiple tracks are cut into slices (13) and interleaved sheets (15) are introduced which are cut off from the provided interleaved sheet material in the cutting region,
said apparatus comprising a material store; and
a removal device (21, 23) which is configured for a removal of the material web (19) from the material store, and
wherein a loop store (61) in which the material web (19) forms a loop (20) is provided for the material web (19),
**characterized in that**
at least one sensor (159) for detecting the loop (20), in particular the lower loop end, and means for moving the material web (19) toward a contact surface (67), into which least one part of the sensor (159) is integrated, are provided, and
**in that** the sensor (159) is configured such that the loop (20) is only detected when the material web (19) contacts the contact surface (67) in the region of the part of the sensor (159) integrated into the contact surface (67).

2. An apparatus according to claim 1,
wherein the sensor part is a part of the sensor (159) which is sensitive with respect to the material web (19) and which responds to the presence of the material web (19), and/or wherein the sensor (159) or the sensor part integrated into the contact surface (67) is arranged such that the loop (20) is only recognized when the loop (20) has reached a predefined maximum loop size.

3. An apparatus according to claim 1 or 2,
wherein the sensor (159) or the sensor part integrated into the contact surface (67) responds to a contact with the material web (19), in particular wherein the sensor (159) or the sensor part is active capacitively, inductively, electromechanically and/or electrostatically

4. An apparatus according to claim 1 or claim 2,
wherein the contact surface (67) bounds a vacuum chamber (69), wherein the sensor (159) comprises a separate measurement space which is in particular relatively small in comparison with the vacuum chamber (69) and to which a vacuum source (157) and a pressure measurement device (161) are connected,
wherein a measurement opening in the contact surface (67) is provided as a part of the sensor (159) integrated into the contact surface (67) and communicates with the measurement space of the sensor (159), and wherein the pressure measurement device (161) is configured to detect a pressure change in the measurement space as soon as the measurement opening is at least partly closed by the material web (19), which is sucked in and is thereby moved toward the measurement opening, and the pressure within the measurement space acted on by the vacuum source (157) drops.

5. An apparatus according to claim 4,
wherein the contact surface (67) is air permeable,
wherein a suction device is connected to the vacuum chamber (69) or
wherein the vacuum chamber (69) belongs to a suction device (63).

6. An apparatus according to any one of the preceding claims,
wherein the apparatus is configured for a multitrack provision of interleaved sheet material and wherein a loop detector (159) is provided for each material web (19), wherein the individual loop ends (159) can be operated individually from one another, in particular wherein the loop detectors (159) are adjustable in the transverse direction.

7. An apparatus according to any one of the preceding claims,
wherein a device for determining a measure for the loop size, in particular for the lower position and/or upper position of the loop (20), is provided.

8. An apparatus according to claim 7,
wherein the reaching of a predefined minimal loop size, in particular of an upper position of the loop (20), and/or the reaching of a predefined maximum loop size, in particular of a lower position of the loop (20), is/are provided as a measure for the loop size.

9. An apparatus according to claim 7 or 8,
wherein the web length entering the loop store (61) per time unit is controllable by an internal or external control device (39) in dependence on the loop size, in particular wherein the removal device (21, 23) is controllable by the control device (39) in dependence on the loop size.

10. An apparatus according to any one of the preceding claims,
wherein a suction device (63) acts on an outer side of the material loop (20) and a blowing device (65) acts on an inner side of the material loop (20), or vice versa, in particular wherein the suction device (63) and the blowing device (65) belong to a common air circuit, in particular wherein the air circuit, in particular the strength and/or the direction of an air flow, is settable and/or controllable by an internal or external control device (39) in dependence on the loop size.

11. An apparatus according to any one of the preceding claims,
wherein the removal device (21, 23) is controllable such that the removal of the material web (19) is started on reaching a predefined minimal loop size and is ended on reaching a predefined maximum loop size, and/or wherein the removal device (21, 23) is controllable such that the web length entering the loop store (61) per time unit is continuously variable, in particular in a ramp-like manner, in dependence on the loop size.

12. An apparatus for a single-track or multitrack slicing of food products (11), in particular a high-speed slicer,
comprising a product feed (49) which supplies products (11) to be sliced on one track or on multiple tracks to a cutting region in which a cutting blade (51) moves in a rotating and/or revolving manner to cut the supplied products (11) into slices (13); and
an apparatus for the provision of web-like interleaved sheet material according to any one of the preceding claims.

13. An apparatus according to claim 12,
wherein a common control device (39) is provided which is configured to coordinate the slicing of the products (11) and the provision of the interleaved sheet material.

14. A method for the single-track or multitrack provision of web-like interleaved sheet material at a cutting region, in particular using an apparatus according to any one of the claims 1 to 11, wherein, in the cutting region, products (11) supplied on one track or on multiple tracks are cut into slices and interleaved sheets (15) are introduced which are cut off from the provided interleaved sheet material in the cutting region, and wherein at least one material web (19), which forms a loop (20) in a loop store (61), is removed from at least one material store by means of the removal device (21, 23),
**characterized in that**
at least one sensor (159) for detecting the loop (20), in particular the lower loop end, and means for moving the material web (19) toward a contact surface (67), into which least one part of the sensor (159) is integrated, are provided; and
**in that** the sensor (159) is configured such that the loop (20) is only detected when the material web (19) contacts the contact surface (67) in the region of the part of the sensor (159) integrated into the contact surface (67).

15. A method according to claim 14,
wherein a device for determining a measure for the loop size, in particular for the lower position and/or upper position of the loop (20), is provided, wherein the reaching of a predefined minimal loop size, in particular of an upper position of the loop (20), and/or the reaching of a predefined maximum loop size, in particular of a lower position of the loop (20), is/are provided as a measure for the loop size, and/or wherein the varying influence of the material loop (20) on a suction device (63) is provided as a measure for the loop size, and/or wherein the reaching of a vacuum measurement in one or more vacuum chambers (69) is provided as a measure for the loop size, and/or wherein the contact surface is air permeable and the varying influence of the material loop (20) on the air permeable contact surface (67) is provided as a measure for the loop size, and/or wherein the result of a position determination of the material loop (20) is provided as a measure for the loop size.

## Revendications

1. Dispositif pour la fourniture en une ou plusieurs voies de matériau de feuille intermédiaire en forme de bande au niveau d'une zone de découpe dans laquelle des produits (11) alimentés en une ou plusieurs voies sont découpés en tranches (13), et des feuilles intermédiaires (15) sont interposées, lesdites feuilles étant séparées du matériau de feuille intermédiaire fourni dans la zone de découpe,
comportant une réserve de matériau, et
comportant un moyen de prélèvement (21, 23) qui est réalisé pour prélever la bande de matériau (19) de la réserve de matériau,
dans lequel un accumulateur de boucle (61) est prévu pour la bande de matériau (19), dans lequel la bande de matériau (19) forme une boucle (20), **caractérisé en ce que**
il est prévu au moins un capteur (159) destiné à détecter la boucle (20), en particulier l'extrémité inférieure de la boucle, ainsi que des moyens destinés à déplacer la bande de matériau (19) contre une surface d'appui (67) dans laquelle est intégrée au moins une partie du capteur (159), et
**en ce que** le capteur (159) est réalisé de telle sorte que la boucle (20) n'est détectée que lorsque la bande de matériau (19) vient en appui contre la surface d'appui (67) dans la zone de la partie du capteur (159) intégrée dans la surface d'appui (67).

2. Dispositif selon la revendication 1,
dans lequel la partie du capteur est une partie du capteur (159) sensible à la bande de matériau (19), qui réagit à la présence de la bande de matériau (19),
et/ou le capteur (159) ou la partie du capteur intégrée dans la surface d'appui (67) est disposé(e) de manière à ce que la boucle (20) ne soit détectée que lorsque la boucle (20) a atteint une taille de boucle maximale prédéterminée.

3. Dispositif selon la revendication 1 ou 2,
dans lequel le capteur (159) ou la partie du capteur intégrée dans la surface d'appui (67) réagit à un contact avec la bande de matériau (19),
en particulier, le capteur (159) ou la partie du capteur agit par voie capacitive, inductive, électromécanique et/ou électrostatique.

4. Dispositif selon la revendication 1 ou 2,
dans lequel la surface d'appui (67) délimite au moins une chambre de dépression (69),
le capteur (159) présente son propre espace de mesure, en particulier relativement petit par rapport à la chambre de dépression (69), auquel sont raccordés une source de dépression (157) et un appareil de mesure de pression (161),
une ouverture de mesure est prévue dans la surface d'appui (67) en tant que partie du capteur (159) intégrée dans la surface d'appui (67), laquelle communique avec l'espace de mesure du capteur (159), et
l'appareil de mesure de pression (161) est conçu pour détecter une variation de la pression dans l'espace de mesure dès que l'ouverture de mesure est fermée au moins partiellement par la bande de matériau (19) aspirée et ainsi déplacée vers l'ouverture de mesure et que la pression à l'intérieur de l'espace de mesure sollicité par la source de dépression (157) diminue.

5. Dispositif selon la revendication 4,
dans lequel la surface d'appui (67) est perméable à l'air,
un moyen d'aspiration est raccordé à la chambre de dépression (69), ou
la chambre de dépression (69) fait partie d'un moyen d'aspiration (63).

6. Dispositif selon l'une des revendications précédentes,
dans lequel le dispositif est conçu pour une fourniture en plusieurs voies de matériau de feuille intermédiaire, et
un détecteur de boucle (159) est prévu pour chaque bande de matériau (19),
les différents détecteurs de boucle (159) peuvent être actionnés indépendamment les uns des autres,
en particulier, les détecteurs de boucle (159) sont déplaçables dans la direction transversale.

7. Dispositif selon l'une des revendications précédentes,
dans lequel est prévu un moyen pour déterminer une cote de la taille de la boucle, en particulier de la position inférieure et/ou supérieure de la boucle (20).

8. Dispositif selon la revendication 7,
dans lequel la cote de la taille de la boucle est définie par le fait d'atteindre une taille de boucle minimale prédéterminée, en particulier une position supérieure de la boucle (20), et/ou d'atteindre une taille de boucle maximale prédéterminée, en particulier une position inférieure de la boucle (20).

9. Dispositif selon la revendication 7 ou 8,
dans lequel la longueur de bande entrant dans l'accumulateur de boucle (61) par unité de temps peut être commandée par un moyen de commande (39) interne ou externe en fonction de la taille de la boucle, et en particulier le moyen de prélèvement (21, 23) peut être commandé par le moyen de commande (39) en fonction de la taille de la boucle.

10. Dispositif selon l'une des revendications précédentes,
dans lequel un moyen d'aspiration (63) sollicite une face extérieure de la boucle de matériau (20), et un moyen de soufflage (65) sollicite une face intérieure de la boucle de matériau (20), ou inversement, et en particulier le moyen d'aspiration (63) et le moyen de soufflage (65) font partie d'un circuit d'air commun,
en particulier, le circuit d'air, en particulier l'intensité et/ou la direction d'un flux d'air, peut être réglé(e) et/ou contrôlé(e) en fonction de la taille de la boucle à l'aide d'un moyen de commande (39) interne ou externe.

11. Dispositif selon l'une des revendications précédentes,
dans lequel le moyen de prélèvement (21, 23) peut être commandé de telle sorte que le prélèvement de la bande de matériau (19) commence lorsqu'une taille de boucle minimale prédéterminée est atteinte, et se termine lorsqu'une taille de boucle maximale prédéterminée est atteinte, et/ou le moyen de prélèvement (21, 23) peut être commandé de telle sorte que la longueur de bande entrant dans l'accumulateur de boucle (61) par unité de temps est variable en continu, en particulier en forme de rampe, en fonction de la taille de la boucle.

12. Dispositif pour la découpe en une ou plusieurs voies de produits alimentaires (11), en particulier trancheuse à haute performance,
comportant une alimentation en produits (49) qui amène des produits à trancher (11) en une ou plusieurs voies jusqu'à une zone de découpe dans laquelle une lame de coupe (51) se déplace en rotation et/ou en révolution afin de découper les produits amenés (11) en tranches (13), et
comportant un dispositif de fourniture d'un matériau de feuille intermédiaire en forme de bande selon l'une des revendications précédentes.

13. Dispositif selon la revendication 12,
dans lequel est prévu un moyen de commande commun (39) qui est réalisé pour coordonner le tranchage des produits (11) et la fourniture du matériau de feuille intermédiaire.

14. Procédé pour la fourniture en une ou plusieurs voies de matériau de feuille intermédiaire en forme de bande au niveau d'une zone de découpe, en particulier au moyen d'un dispositif selon l'une des revendications 1 à 11, dans lequel, dans la zone de découpe, des produits (11) alimentés en une ou plusieurs voies sont découpés en tranches (13), et des feuilles intermédiaires (15) sont interposées, lesdites feuilles étant séparées du matériau de feuille intermédiaire fourni dans la zone de découpe, et au moins une bande de matériau (19) est prélevée d'au moins une réserve de matériau à l'aide d'un moyen de prélèvement (21, 23), ladite bande formant une boucle (20) dans un accumulateur de boucle (61),
**caractérisé en ce que**
il est prévu au moins un capteur (159) destiné à détecter la boucle (20), en particulier l'extrémité inférieure de la boucle, ainsi que des moyens destinés à déplacer la bande de matériau (19) contre une surface d'appui (67) dans laquelle est intégrée au moins une partie du capteur (159), et
**en ce que** le capteur (159) est réalisé de telle sorte que la boucle (20) n'est détectée que lorsque la bande de matériau (19) vient en appui contre la surface d'appui (67) dans la zone de la partie du capteur (159) intégrée dans la surface d'appui (67).

15. Procédé selon la revendication 14,
dans lequel est prévu un moyen pour déterminer une cote de la taille de la boucle, en particulier de la position inférieure et/ou supérieure de la boucle (20),
la cote de la taille de la boucle est définie par le fait d'atteindre une taille de boucle minimale prédéterminée, en particulier une position supérieure de la boucle (20), et/ou d'atteindre une taille de boucle maximale prédéterminée, en particulier une position inférieure de la boucle (20), et/ou
la cote de la taille de la boucle est définie par l'influence variable de la boucle de matériau (20) sur un moyen d'aspiration (63), et/ou
la cote de la taille de la boucle est définie par le résultat d'une mesure de la dépression dans une ou plusieurs chambres de dépression (69), et/ou
la surface d'appui est perméable à l'air et la cote de la taille de la boucle est définie par l'influence variable de la boucle de matériau (20) sur la surface d'appui (67) perméable à l'air, et/ou
la cote de la taille de la boucle est définie par le résultat d'une détermination de la position de la boucle de matériau (20).
